# EUROPÄISCHE PATENTSCHRIFT

(11) **EP 1 305 151 B1**
(45) Veröffentlichungstag und Bekanntmachung des Hinweises auf die Patenterteilung: **15.12.2004**
(21) Anmeldenummer: 01984155.0
(22) Anmeldetag: 06.07.2001
(51) Int. Cl.: B29C 44/60, B29C 67/20, B29C 44/44

(54) **VERFAHREN ZUR HERSTELLUNG VON SCHAUMSTOFFPRODUKTEN**
METHOD FOR PRODUCING FOAM PRODUCTS
PROCEDE DE FABRICATION D'ARTICLES EN MOUSSE

(30) Priorität: 11.07.2000 AT 11932000
(43) Veröffentlichungstag der Anmeldung: 02.05.2003
(73) Patentinhaber: Greiner Perfoam GmbH, 4550 Kremsmünster (AT)
(72) Erfinder: WEINGARTNER, Rudolf, A-4501 Neuhofen an der Krems (AT)
(74) Vertreter: Secklehner, Günter, Dr.
(86) Internationale Anmeldenummer: PCT/AT2001/000222
(87) Internationale Veröffentlichungsnummer: WO 2002/004191

(56) Entgegenhaltungen:
- EP-A- 0 037 860
- EP-A- 0 455 835
- EP-A- 0 657 266
- US-A- 4 852 028

## Beschreibung

Die Erfindung betrifft ein Verfahren sowie eine Vorrichtung und einen Meßbehälter zur Herstellung von Schaumstoffprodukten sowie das damit hergestellt Schaumstoffprodukt gemäß den Merkmalen in den Oberbegriffen der Ansprüche 1, 14, 28 und 32, entsprechend der EP 0 657 266 A.

Ökologische sowie ökonomische Gründe sind die Triebkraft vieler Unternehmen, sich vermehrt der Thematik "Wiederverwertung von Kunststoffabfällen" zu widmen. Letztere können einerseits durch Hydrierung in neu verwendbare Sekundärrohstoffe umgewandelt werden bzw. ist es andererseits möglich, durch thermische Behandlung Thermoplaste einer neuen Formgebung zu unterziehen. Es besteht weiters die Möglichkeit, Kunststoffabfälle zu zerkleinern und die entstandenen Partikel mittels Bindemittel zu neuen Produkten umzusetzen.

Der letztgenannte Weg ist u.a. die Methode der Wahl für Schaumstoffteile. Schaumstoffabfälle, sei es aus der eigenen Produktion oder aber auch aus dem Produktkreislauf, beispielsweise aus der Autoindustrie, werden dazu mittels Mühlen auf eine geeignete Korngröße zerkleinert, in der Folge mit einem flüssigen schaumbildenden Einkomponenten- bzw. Mehrkomponenten-Präpolymer vermischt und diese Mischung wird in einer geeigneten Form aufgeschäumt, wobei die Zwischenräume zwischen den Schaumstoffpartikel mit dem neu gebildeten Schaumstoff aus dem Präpolymer ausgefüllt werden. Ein derartiges Verfahren ist z.B. aus der DE 40 25 102 A1 bekannt.

Den bisher bekannten derartigen Verfahren haftet allerdings der Makel an, daß eine bestimmte Obergrenze des Massen- bzw. Volumsanteils an zuzusetzenden Schaumstoffabfällen nicht überschritten werden konnte. So ist z.B. in der genannten DE-A1 eine Obergrenze von 95 Vol.-% Anteil an Schaumstoffresten und/oder Schaumstoffabfällen angegeben, da eine ausreichende Haftverbindung zwischen den einzelnen Partikeln darüber hinaus nicht mehr gewährleistet werden kann. Die Ursachen für diesen Umstand sind vielfältig. So ist es beispielsweise bislang nicht gelungen, eine ausreichende Durchmischung der Schaumstoffreste mit den Bindemitteln zu erreichen. Versuche in diese Richtung wurden zwar schon getätigt und werden dazu auch unterschiedlichste Mischorgane eingesetzt. So ist z.B. aus der US 4,714,715 A bekannt, einen Schneckenförderer derart einzusetzen, daß das Polystyrolteilchen im Verlauf des Förderganges mit weiteren Komponenten, wie z.B. einem Melaminharz als Bindemittel, einem Treibmittel, einem Katalysator oder dgl. vermischt und diese Mischung einem Zwischenspeicher zugeführt wird, bevor damit eine Form gefüllt wird. Entsprechend den Angaben in der US-A können Mischungen mit 10 bis 150 Vol.-% Harz auf 100 Vol.-% Polystyrolteilchen verarbeitet werden.

Es ist weiters aus dem Stand der Technik bekannt, z.B. aus der DE 14 79 952 A, Formkörper aus Schaumkunststoffen dadurch, daß dem Präpolymer Füllstoffe zugesetzt werden, kostengünstiger herzustellen. Zur Erreichung eines homogenen Gefüges werden nach dem kontinuierlichen Verfahren dieser DE-A die Füllstoffe im freien Fall gleichmäßig mit dem Präpolymer besprüht.

Aus der EP 0 657 266 A ist schließlich ein Verfahren zur Herstellung eines Formteiles aus über ein Präpolymer miteinander verbundenen Flocken aus Kunststoffschaum bekannt, wobei diese Mischung unter einem vorbestimmbaren Druck in eine Form eingebracht wird und die Form Lüftungsöffnungen zum Abströmen des gasförmigen Mediums sowie zur Zufuhr weiterer Reaktionskomponenten aufweist. Wiederum ist der mengenmäßige Anteil der Schaumstoffflocken an der Gesamtmenge mit bis zu 90 % begrenzt.

Aus der US 4,852,028 A ist ein Verfahren zum Messen und zum Regeln des Raumgewichts eines expandierten Materials, insbesondere Polystyrol-Granulat mit einem Raumgewicht von 600 kg/m³ bis 700 kg/m³ bekannt, bei dem das Material zusammen mit einem Expansionsmittel einer Expansionskammer mittels eines Schneckenförderers zugeführt wird und dort mittels Dampf auf ein Raumgewicht von 15 kg/m³ bis 20 kg/m³ vorexpandiert wird. Es wird dabei das Gewicht pro Volumeneinheit des expandierten Materials ermittelt und mit einem gewünschten Wert für das Raumgewicht verglichen und in der Folge in Abhängigkeit von der Abweichung vom gewünschten Wert durch Regelung der Versorgungsmenge pro Zeiteinheit vom Granulatmaterial unter Berücksichtigung des ebenfalls gemessenen Feuchtigkeitsgehaltes des expandierten Materials geregelt. Zur Regelung werden die Abweichungen vom gewünschten Wert für das Raumgewicht über eine vorbestimmbare Zeitspanne integriert und ein Durchschnittswert gebildet, der die Grundlage für einen gewünschten Durchschnittswerts des Raumgewichts einer darauffolgenden Zeitspanne bildet, wobei letzterer der Wert ist, der benötigt wird um den besagten vorgegebenen Durchschnittswert zu bestimmen, wenn das durchschnittliche Raumgewicht über beide Zeitspannen berechnet wird. Die Menge an Granulat pro Zeiteinheit wird in Abhängigkeit von dem berechneten gewünschten Wert des Raumgewichts während der zweiten Zeitspanne derart gesteuert, daß ein Durchschnitts wert über die Summe der beiden Zeitspannen erhalten wird, der gleich dem vorgegebenen gewünschten Wert des Raumgewichts ist.

Die Vorrichtung zur Durchführung des Verfahrens umfaßt eine Wägeeinrichtung, deren Boden durch zwei verschwenkbare Platten gebildet ist. Zudem ist oberhalb der Wägeeinrichtung ein ebenfalls verschwenkbarer Deflektor angeordnet. Sowohl der Deflektor als auch die beiden Bodenplatten werden pneumatisch bewegt.

Diese Wägeeinrichtung ist der Expansionskammer nachgeordnet und wird mit expandiertem Material aus der Expansionskammer vollständig gefüllt. Nachfolgend wird der Deflektor in eine die Wägeeinrichtung abschirmende Stellung verschwenkt, sodaß eine weitere Befüllung verhindert wird.

In der Wägeeinrichtung ist ein Feuchtigkeits- und ein Temperatursensor angeordnet. Diese sind mit einer Füllstandsmeßzelle, die im Rahmen der Wägeeinrichtung angeordnet ist und mit einem Microcomputer verbunden.

Das gewünschte Raumgewicht der expandierten Teilchen ergibt sich aus der Zeitspanne während der das Granulat in der Expansionskammer verbleibt.

Die EP 0 455 835 A offenbart ein Verfahren zur Herstellung eines Kunstharz-Schaumformkörpers aus Pellets aus einem vorgeschäumten Kunstharz, die in einer Form durch Temperatureinwirkung expandiert werden.

Um das Gewicht der in den Formhohlraum eingebrachten Pellets konstant zu halten, wird vor der Beschickung der Form mit den Pellets deren Dichte gemessen und auf der Grundlage dieses Meßergebnisses nach der Beschickung die Rißbreite der Form, d.h. also der Abstand zwischen dem Ober- und dem Unterteil der Form, eingestellt.

Durch die EP 0 037 860 A ist ein Verfahren zur Wiederverwertung von Abfall in Form von Glasfasern, Steinwolle und Polyurethan-Hartschaum bekannt. Diese werden zusammen mit einem Bindemittel aus einem Isocyanat oder einem Phenolharz unter Druck und Temperatur zu den jeweils gewünschten Endprodukten verarbeitet, z.B. Platten für Verpackungszwecke.

Der Bindemittelanteil beträgt zwischen 3 % und 6 %.

Der vorliegenden Erfindung liegt nun die Aufgabe zugrunde, ein Verfahren sowie eine Vorrichtung anzugeben, mit dem bzw. mit der ein Schaumstoffprodukt hergestellt werden kann, welches in seinem Querschnitt homogenere Eigenschaften aufweist. Eine weitere Teilaufgabe der Erfindung ist es, eine Methode aufzuzeigen, um den Anteil an Schaumstoffflocken in Verbundschaumsystemen zu erhöhen.

Diese Aufgabe der Erfindung wird durch die Merkmale in den Kennzeichenteilen der Ansprüche 1, 14, 28 und 32 jeweils eigenständig gelöst. Vorteilhaft ist daran, daß nunmehr ein Verfahren sowie eine Vorrichtung zur Verfügung gestellt werden kann, das bzw. die es ermöglicht, Raumgewichtsfraktionen, welche anteilsmäßig das fertige Schaumstoffprodukt bilden, sehr genau zu bestimmen, d.h. deren Gewicht bzw. Volumen zu messen und aus den gewonnenen Daten automatisch das Verhältnis mehrerer Raumgewichtsfraktionen zueinander nachzujustieren. Dadurch kann erreicht werden, daß trotz gleichbleibender Festigkeit des Schaumstoffproduktes und gleichbleibenden Zusammenhalt der Schaumstoffflocken untereinander der benötigte Bindemittelanteil gesenkt werden kann. Es ist damit nicht nur eine Senkung der Produktionskosten und der Schonung der Umwelt bzw. Primärstoffresourcen erreichbar, sondern läßt sich auch der Wartungsaufwand für die Vorrichtung bzw. einzelner Teile davon verringern, da der Anteil an vorzeitig aushärtendem Bindemittel in Anlagenteilen ebenfalls gesenkt werden kann. Ein weiterer Vorteil, der sich damit erzielen läßt ist, daß bei laufender Produktion die Eigenschaften der eingesetzten Schaumstoffflocken, insbesondere deren Raumgewicht, geändert werden können, ohne daß damit eine größere Anzahl an Ausschuß produziert wird bzw. ein händisches Nachjustieren der in die Form eingefüllten Menge erfolgen muß, da innerhalb von wenigen Takten das Soll-Raumgewicht des Schaumstoffproduktes wieder erreicht werden kann. Es versteht sich dabei von selbst, daß, wenn Schaumstofftlocken unterschiedlichsten Raumgewichts verwendet werden, jeweils zumindest eine Raumgewichtsfraktion Raumgewichte unterhalb und zumindest eine Raumgewichtsfraktion Raumgewichte oberhalb des Soll-Raumgewichtes aufweisen muß. Durch dieses neue Verfahren sowie die neue Vorrichtung läßt sich aber auch der Aufwand für Personal verringern, da im wesentlichen, abgesehen von unvorhergesehenen Störfällen, nunmehr lediglich darauf geachtet werden muß, daß ausreichend Schaumstoffflocken zur Verfugung stehen. Neben der sehr sauberen Verfahrensweise ist es nunmehr auch möglich, gleichartige Schaumstoffprodukte mit sehr einheitlichen Eigenschaften, insbesondere Raumgewichten, serienmäßig zu fertigen, wodurch wiederum Ausschuß, der aufgrund von Kundenbeanstandungen entsteht, verringert werden kann.

Vorteilhafte Weiterbildungen des erfindungsgemäßen Verfahrens sind in den Ansprüchen 2 bis 13 gekennzeichnet.

So ist es mit Hilfe der Weiterbildungen entsprechend den Ansprüchen 2 bis 10 möglich, das jeweilige Verfahren einfach an die herzustellenden Schaumstoffprodukte, insbesondere die jeweiligen Formen zur Bildung der Schaumstoffprodukte anzupassen, wobei unter Umständen nicht nur auf zusätzliches Bindemittel verzichtet werden kann, sondern auch eine weitere Verbesserung in Richtung Senkung des Verschmutzungsgrades von Anlageteilen sowie gleichmäßigere Schaumstoffprodukte durch bessere Befüllung von Problemstellen der Form erhalten werden können.

Mit der Ausgestaltung des Verfahrens nach Anspruch 11 kann eine sichere und ausreichende Befüllung der Teilvolumina des Wägebehälters erreicht werden, ohne daß der überdosierte Mengenanteil bei der Bestimmung des Gewichts bzw. des Volumens der Füllung des Teilvolumens mit berücksichtigt wird.

Nach einer Weiterbildung entsprechend Anspruch 12 ist eine Dosierung der Schaumstoffflocken und/oder des Schaumstoffflocken-Bindemittelgemisches in die Form mit einem Zellrad vorgesehen. Damit kann erreicht werden, daß ständig gleichbleibende definierte Volumina an Schaumstoffflocken, gegebenenfalls vermischt mit Bindemittel, der Form zugeführt werden, sodaß auf eine zusätzliche Wägung des einzufüllenden Gemisches verzichtet werden kann.

Es ist aber auch eine Variante des Verfahrens entsprechend Anspruch 13 möglich, wobei von Vorteil ist, daß über die sehr genaue Dosiermöglichkeit des Bindemittels weitere Materialeigenschaften, insbesondere die Härte, in der Serienproduktion sehr gleichmäßig für gleichartige Schaumstoffprodukte festgelegt werden können.

Mit den Weiterbildungen der Vorrichtung entsprechend den Ansprüchen 15 und 16 kann wiederum der Vorteil der genauen Volumen- bzw. Gewichtsbestimmung der Schaumstoffflocken verbessert werden.

Von Vorteil ist weiters eine Vorrichtungsausbildung entsprechend Anspruch 17, mit der die Materialeigenschaften der Schaumstoffflocken für eine gute Durchmischung in der Vorrichtung mitberücksichtigt werden können.

Es hat sich dabei eine Ausbildung entsprechend Anspruch 18 als vorteilhaft erwiesen, womit sich eine weitere Vergleichmäßigung der herzustellenden Mischung erreichen läßt.

Eine einfache und sehr genaue Dosierung der fertigen Mischung in die Form läßt sich mit der Ausbildung der Vorrichtung nach Anspruch 19 erreichen.

Durch die Zumischung des Bindemittels entsprechend der Ausführungsvariante der Vorrichtung nach Anspruch 20 läßt sich eine sehr feine Verteilung des Bindemittels im Schaumstoffflockengemisch erreichen.

Möglich sind weiters Ausbildungen der Vorrichtung entsprechend den Ansprüchen 21 bis 23, wodurch kurzzeitige Produktionsstillstände aufgrund mangelnder Bereitstellung von Sekundärrohstoffen vermieden werden können.

Eine Vereinfachung der Vorrichtung kann durch die Ausbildung nach Anspruch 24 erreicht werden, indem das Bindemittel direkt in die Form eingesprüht wird, wodurch ein vorzeitiges Aushärten des Bindemittels und damit die Verschmutzung von Anlagenteilen vermieden werden kann.

Eine sehr gleichmäßige Befüllung von komplizierten Geometrien von Formhohlräumen läßt sich mit der Weiterbildung der Vorrichtung nach Anspruch 25 erreichen.

Eine Vereinfachung der gesamten Vorrichtung ist über die Ausführungsvariante der Vorrichtung nach Anspruch 26 erzielbar.

Weiters kann über die Anordnung einer Meßzelle am Meßbehälter jederzeit eine automatische Füllhöhenbestimmung und damit eine automatische Unterbrechung der Zuführung von Schaumstoffflocken in den Meßbehälter erfolgen, wie dies im Anspruch 27 beschrieben ist.

Schließlich sind aber auch Ausführungsvarianten nach den Ansprüchen 29 bis 31 von Vorteil, wodurch eine entsprechende Genauigkeit der Zusammensetzung und damit der Produkteigenschaften erreicht werden kann.

Weitere Ausführungsvarianten des erfindungsgemäßen Schaumstoffproduktes sind in den Ansprüchen 33 bis 37 angegeben, und können deren Vorteil der Beschreibung entnommen werden.

Zum besseren Verständnis der Erfindung wird diese anhand der in den nachfolgenden Figuren gezeigten Ausführungsbeispiele näher erläutert.

Es zeigen:
- Fig. 1: eine erfindungsgemäße Vorrichtung in schematisch vereinfachter Darstellung;
- Fig. 2: eine Ausführungsvariante der Vorrichtung nach Fig. 1 in schematisch vereinfachter Darstellung;
- Fig. 3: eine Ausführungsvariante der erfindungsgemäßen Vorrichtung mit einer Freifallmischstrecke;
- Fig. 4: eine Ausführungsvariante der Vorrichtung in schematisch vereinfachter Darstellung unter Verwendung eines Schneckenmischers;
- Fig. 5: eine vereinfachte, schematische Darstellung einer Ausführungsvariante der Vorrichtung unter Verwendung des Formwerkzeuges als Wägeeinrichtung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Mit dem erfindungsgemäßen Verfahren können Gegenstände aus Schaumstoffen, z.B. Formteile, Blockschäume etc. unter Verwendung von Recyclingschaumstoffen hergestellt werden, welche über ihren Querschnitt bzw. ihr Volumen gesehen primär einheitliche Eigenschaften aufweisen. Unter Recyclingschaumstoffen sollen dabei nicht nur solche verstanden werden, welche aus dem Werkstoffkreislauf, d.h. aus bereits verwendeten Produkten, wie beispielsweise der Autoindustrie, Verpackungsschäume oder dgl., anfallen, sondern auch jene Reste, die aus der eigenen Produktion stammen, z.B. beim Zuschnitt von Formteilen anfallen, wie z.B. Polstern, Matratzen, Schallschutzelementen, Verkleidungselementen oder dgl. Selbstverständlich ist es aber ohne weiteres möglich, Kunststoffschäume aus Primärmaterial, also extra für diesen Zweck neu hergestellte Kunststoffschäume einzusetzen.

Unter einheitlichen Eigenschaften ist zu verstehen, daß selbstverständlich produktionsbedingt eine gewisse enge Variationsbreite dieser Eigenschaften vorherrschend ist. Dies resultiert z.B. daraus, daß Recyclingschaumstoffe unterschiedlichster Herkunft verwendet werden, wodurch z.B. die Dichte auch über den Querschnitt, d.h. von Schaumstoffpartikel zu Schaumstoffpartikel variieren kann.

Selbstverständlich ist es weiters möglich, mit dem erfindungsgemäßen Verfahren Formteile herzustellen, welche z.B. in bestimmten Bereichen eine größere Dichte aufweisen. Dies kann z.B. in statischen Erfordernissen begründet sein, beispielsweise wenn über diese Bereiche die Montage der Formteile erfolgen soll und somit eine größere Ausreißfestigkeit vorhanden sein muß. Die größere Dichte kann dadurch erreicht werden, indem z.B. diese Bereiche stärker verpreßt werden bzw. in diesen Bereichen eine größere Menge an Schaumstoffteilchen vorgelegt wird. Dadurch ändern sich naturgemäß die Eigenschaften über den Querschnitt gesehen, jedoch kann das Wesen der Erfindung rein rechnerisch auch an diesen Teilen nachvollzogen werden.

Selbstverständlich ist es weiters möglich, daß die erfindungsgemäßen Produkte entsprechend dem Stand der Technik Verstärkungselemente, wie z.B. Gitter, Vliese oder dgl. auf ihren Deckflächen bzw. in ihren Korpus aufweisen und ist es weiterhin möglich, z.B. Deckschichten oder dgl. anzubringen. Als Materialien können bevorzugt z.B. Polyurethan-Weichschaumabfälle, Polyurethan-Kalt- und/oder Heißformschaumabfälle, Polyurethan-Weichschaumabfälle mit Textilien und/oder Folien beschichtet bzw. kaschiert, Polyurethan-Verbundschaumabfälle, aber auch Gummigranulate oder Korkgranulate verwendet werden. Daneben können aber auch andere Schaumstoffe, z.B. Polyolefin-Schaumstoffe, Polyamid-Schaumstoffe oder dgl. eingesetzt werden. Dazu ist es möglich, daß für das Herstellen der Schaumstoffgegenstände diesen vorgenannten Materialien noch thermoplastische Abfälle und/oder Natur- und/oder Kunstfasern in verschiedenen Längen zugesetzt sind.

Verfahrensgemäß werden die anfallenden Recyclingschäume auf eine bestimmte Partikelgröße zerkleinert, die z.B. im Bereich zwischen 2 mm und 20 mm liegen kann. Obwohl Partikel in dieser Größenordnung bevorzugt sind, liegt es selbstverständlich auch im Bereich der Erfindung, größere bzw. kleinere Partikel, z.B. im Bereich zwischen 1 mm und 30 mm, zu verwenden.

Zur Herstellung eines einheitlichen Produktes aus den Schaumstoffpartikeln stehen mehrere Möglichkeiten zur Verfügung, um die Partikel untereinander zu verbinden. So ist es einerseits möglich, den Schaumstoffpartikeln eine gewisse Menge eines Präpolymer zuzumischen. Die Menge kann dabei im Bereich zwischen 1 Gew.-% und 20 Gew.-% betragen, wobei vorteilhafterweise aufgrund des erfindungsgemäßen Verfahrens auch Mengenanteile zwischen 1 Gew.-% und 5 Gew.-%, vorzugsweise zwischen 2 Gew.-% und 4 Gew.-%, insbesondere 3 Gew.-%, verwendet werden können, wodurch vorteilhafterweise die Kosten für die Primärrohstoffe verringert werden und darüber hinaus eine Schonung der Primärrohstoffe erreicht werden kann.

Selbstverständlich können die Mengenanteile an zugesetzten Präpolymer größer 5 Gew.-% in bezug auf die Gesamtmischung und beispielsweise im Bereich von 6 Gew.-% bis 8 Gew.-% betragen.

Wie im folgenden noch im Detail ausgeführt wird, kann das Zumischen des Präpolymer auf unterschiedlichste Weise erfolgen.

Das Präpolymer kann z.B. ein- oder mehrkomponentig sein. So ist es z.B. möglich, im Falle von Polyurethan Gemische aus einem Polyol mit einem Polyisocyanat bzw. einkomponentige Polyurethanharze zu verwenden.

Daneben besteht aber auch die Möglichkeit, zu 100 % Schaumstoffpartikel einzusetzen, indem auf Bindemittel verzichtet wird und z.B. die Schaumstoffpartikel an ihrer Oberfläche durch Temperaturerhöhung, z.B. mittels Warm- bzw. Heißluft, erwärmt werden, wodurch ein gegenseitiges Verschmelzen der Schaumstoffpartikel ermöglicht wird. Der Vorteil, der sich damit erreichen läßt, ist nicht nur, daß kein Bindemittel verwendet werden muß, sondern es darüber hinaus nicht notwendig ist, zusätzliche Mischanlagen zu verwenden, welche naturgemäß einer gewissen Verschmutzung unterliegen. Es können damit auch hohe Raumgewichte der fertigen Produkte erzielt werden, wobei gleichzeitig die Energiebilanz der Gesamtanlage verbessert werden kann. Zu beachten ist dabei jedoch, daß unter Umständen Schaumstoffpartikel unterschiedlichster Herkunft und damit mit unterschiedlichem Temperaturverhalten eingesetzt werden, sowie weiters, daß die fertigen Produkte nach dem Entformen eine höhere Temperatur aufweisen, als es bei der Herstellung mit Bindemitteln der Fall ist. Es besteht jedoch die Möglichkeit der Energierückgewinnung, beispielsweise durch Wärmeaustausch der erwärmten Luft der Halle, in der die fertigen Produkte z.B. gealtert werden. Von Vorteil ist es bei dieser Verfahrensweise auch, mit Trennmitteln in den Werkzeugen zu arbeiten, da damit der Wartungs- und Reinigungsaufwand gesenkt werden kann.

Es besteht weiters die Möglichkeit, die Schaumstoffpartikeloberfläche durch Glykolyse und mit einem Gas zur chemischen Reaktion zu bringen, wodurch wiederum der Vorteil entsteht, daß kein zusätzliches Bindemittel erforderlich ist und darüber hinaus der Maschinenaufbau vereinfacht werden kann. Aufgrund des Reaktionsgases sollten aber gasdichte Formen verwendet werden.

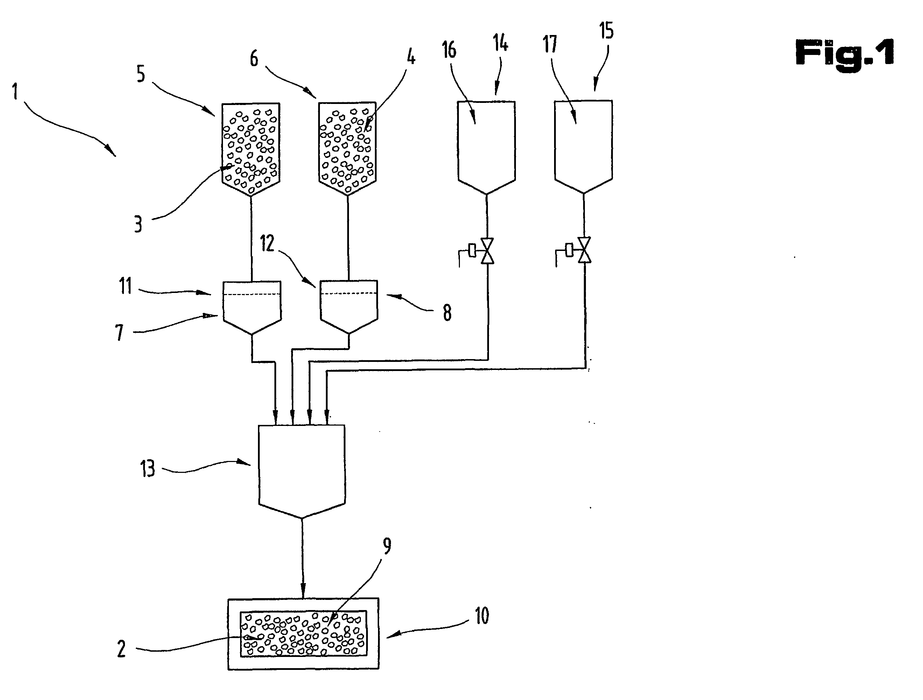

Fig. 1 zeigt eine erfindungsgemäße Vorrichtung 1 zur Herstellung von Schaumstoffprodukten 2 aus Schaumstoffflocken 3, 4. Letztere werden bevorzugt in Vorratsbehältern 5,6 vorrätig gehalten. Nicht dargestellt sind in Fig. 1 Zerkleinerungsvorrichtungen, beispielsweise Mühlen, Schneid- oder Reißmaschinen, mit denen die als Sekundärrohstoffe dienenden Abfallschäume zerkleinert werden und die den Vorratsbehältern 5, 6 vorgeschaltet sind. Als Zerkleinerungsvorrichtungen können sämtliche nach dem Stand der Technik bekannte Vorrichtungen verwendet werden und ist dabei auch eine Aussiebung nach Partikelgröße möglich.

Selbstverständlich können aber auch Zerkleinerungsvorrichtungen nach den Vorratsbehältern 5, 6 angeordnet sein, beispielsweise um eine weitere Zerkleinerung zu ermöglichen oder aber auch um eine sogenannte "Just-in-Time"-Zerkleinerung durchzuführen, d.h. daß in letzterem Fall in den Vorratsbehältern 5, 6 größere Abfallschaumprodukte vorrätig gehalten werden können.

Der Produktionslinie weiterfolgend sind den Vorratsbehältern 5, 6 als Wägebehälter 7, 8 ausgebildete Meßbehälter nachgeordnet.

Aus dem Stand der Technik, z.B. der EP 0 657 266 A ist eine Wägung der Schaumstoffflokken zur Herstellung von Verbundschäumen vor der Befüllung prinzipiell bekannt. Diese Wägung erfolgte bislang derart, daß der zugehörige Behälter zur Gänze aufgefüllt wurde und aufgrund des Volumens dieses Behälters ein Raumgewicht verarbeitet werden konnte, welches eine mehr oder weniger große Schwankungsbreite zeigte. Die Folge davon war, daß aufgrund der nicht genauen Bestimmungsmöglichkeit des eingesetzten Raumgewichtes der Schaumstoffpartikel ständig mit einer gewissen Sicherheit in bezug auf das als Bindemittel eingesetzte Präpolymer gearbeitet werden mußte, d.h. daß das Präpolymer im Überschuß zudosiert wurde.

Mit der Vorrichtung 1 nach der Erfindung wird nun derart verfahren, daß im Vorratsbehälter 5 Schaumstoffflocken 3 vorrätig gehalten werden, welche zumindest überwiegend ein anderes Raumgewicht aufweisen als die Schaumstoffflocken 4 im Vorratsbehälter 6. Üblicherweise ist dies dadurch zu erreichen, daß Abfallschäume unterschiedlichster Herkunft verwendet werden. Die beiden Raumgewichte der Schaumstoffflocken 3, 4 in den Vorratsbehältern 5, 6, d.h. die Raumgewichtsfraktionen der Schaumstoffflocken 3, 4, bedingt durch den Einsatz von Schaumstoffflocken 3, 4 unterschiedlicher Herkunft, sind dabei so bemessen, daß ein Soll-Raumgewicht des Schaumstoffproduktes 2 zwischen diesen beiden Raumgewichtsfraktionen liegt. Die Wägebehälter 7, 8 sind derart bemessen, daß stets ein konstantes Volumen befüllt wird, wobei die Summe der beiden Volumina bevorzugt auf das Volumen eines Formhohlraumes 9 einer Form 10 bzw. einem Vielfachen davon abgestimmt sind. Da üblicherweise die Befüllung nicht so durchzuführen ist, daß ein vorbestimmtes Volumen der Wägebehälter 7, 8 gleichmäßig ausgefüllt wird, ist es vor der Wägung zweckmäßig, über geeignete Maßnahmen dieses vorbestimmte Volumen einzustellen bzw. sicherzustellen, daß dieses vorbestimmte Volumen durch die Befüllung mit den Schaumstoffflocken 3, 4 nicht überschritten wird. Eine nicht vollständige Befüllung des vorbestimmten Volumens kann in den folgenden Takten berücksichtigt werden. Beispielsweise kann nach Befüllung der Wägebehälter 7, 8 die Füllhöhe entlang der Behältermittelachse größer sein als an den Seitenwänden der Wägebehälter 7, 8. Um diesen überstehenden Anteil an Schaumstoffflocken 3, 4 zu entfernen bzw. diesen Anteil nicht mitzuwägen, besteht die Möglichkeit, wie strichliert in Fig. 1 angedeutet, Abtrenneinrichtungen, z.B. Schieber 11, 12, in die Wägebehälter 7, 8 einzuschieben, wobei die Position dieser Schieber 11, 12 so gewählt wird bzw. die Wägebehälter 7, 8 vorzugsweise soweit aufgefüllt werden, daß nach Einschieben der Schieber 11, 12 eine ebene Oberfläche der Befüllung entsteht, die zumindest im wesentlichen der Unterseite der Schieber 11, 12 entspricht. Damit der abgetrennte Teil der Schaumstoffflocken 3, 4 nicht mitgewogen wird, besteht die Möglichkeit, jenen Teil der Wägebehälter 7, 8, der oberhalb der Schieber 11, 12 liegt, zu entkoppeln, sodaß im Endeffekt tatsächlich ein konstantes Volumen der eingefüllten Schaumstoffflocken 3, 4 gewogen wird.

Selbstverständlich gibt es auch andere Methoden, um dieses konstante Volumen zu erreichen, beispielsweise ist es möglich, in die Wägebehälter 7, 8 Luft einzublasen und auf diese Weise eine gleichmäßige Verteilung der Schaumstoffflocken 3, 4 und damit eine ebene Oberfläche der Befüllung zu erhalten.

Vorteilhafterweise sind die Volumina der Wägebehälter 7, 8 im Verhältnis 1:1 in bezug auf das Volumen des Formhohlraumes 9 aufgeteilt, d.h., daß jeweils 50 % des Volumens mit Schaumstoffflocken 3 und 50 % mit Schaumstoffflocken 4 befüllt werden. Selbstverständlich ist es möglich, daß dieses Verhältnis, insbesondere bei nachfolgenden Takten der Produktion geändert wird, wenn festgestellt werden muß, daß aufgrund dieses Volumsverhältnisses und des damit verbundenen Raumgewichtes das gewünschte Soll-Raumgewicht des fertigen Schaumstoffproduktes 2 nicht erreicht wird. Die Variation des Volumenverhältnisses kann aber auch so durchgeführt werden, daß zwar die Volumina der Wägebehälter 7, 8 konstant sind, jedoch die tatsächlichen Füllvolumina mit den Schaumstoffflocken 3, 4 variiert werden.

Andererseits ist es natürlich möglich, die Volumina konstant zu lassen und statt dessen ein höheres Raumgewicht an Schaumstoffflocken 3 oder 4 beispielsweise unter Druck in die Wägebehälter 7, 8 einzufüllen.

Für die Vorgangsweise hat es sich als zweckmäßig erwiesen, in einem ersten Schritt beide Wägebehälter 7, 8 gleichmäßig zu befüllen und das daraus resultierende Gesamtraumgewicht des Schaumstoffproduktes 2 zu bestimmen, wobei je nach Art der Verbindung der Schaumstoffflocken 3, 4 untereinander auch der Anteil des Bindemittels mitberücksichtigt werden kann.

Nach diesem ersten Takt wird die Abweichung des tatsächlich erreichten Raumgewichtes vom gewünschten Soll-Raumgewicht für das Schaumstoffprodukt 2 festgestellt und in der Folge die jeweils erforderlichen Gewichte oder Volumina für die vorzulegenden Schaumstoffflocken 3 bzw. 4 bestimmt. Es ist mit dieser Art eines Interpolationsverfahrens möglich, innerhalb weniger Takte, beispielsweise drei bis vier, vollautomatisch, z.B. mittels einer zentralen Steuer- und/oder Regeleinrichtung, insbesondere EDV-Steuerung, das Raumgewicht des fertigen Schaumstoffproduktes 2 derart einzustellen, daß die Abweichungen vom Soll-Raumgewicht für das Schaumstoffprodukt 2 sehr gering sind. Es ist aber auch möglich, die erforderliche Korrektur am selben Schaumstoffprodukt 2 durchzuführen, indem ein Teil der überschüssigen Schaumstoffflocken 3, 4 einer Raumgewichtsfraktion entfernt wird, oder der Anteil an jener Raumgewichtsfraktion die als zu wenig bestimmt wurde zu erhöhen, bzw. sowohl eine angepaßte Erhöhung und Verringerung der Menge oder des Volumens beider Raumgewichtsfraktionen vorzunehmen. Infolgedessen ist es möglich, da keine zusätzliche Sicherheit für das Bindemittel erforderlich ist, letzteres sehr genau zu dosieren und auf diese Weise den Bindemittelanteil im Schaumstoffprodukt 2 zu reduzieren.

Ein weiterer Vorteil, der sich mit dieser Verfahrensweise erzielen läßt, ist, daß auf diese Weise die Möglichkeit geschaffen wird, während der Produktion beliebige Sekundärrohstoffe, d.h. Schaumstoffflocken 3, 4 einzusetzen, wobei unter beliebig insbesondere mit unterschiedlichem, d.h. wechselndem Raumgewicht zu verstehen ist und trotzdem ohne manuelle Neujustierung der einzufüllenden Menge an Schaumstoffflocken 3, 4 in den Formhohlraum 9 wiederum eine automatische Nachjustierung innerhalb weniger Takte erreicht wird.

Selbstverständlich kann auch die Messung der Füllhöhe in den Wägebehältem 7, 8 automatisch, beispielsweise rechnerunterstützt erfolgen und nach Erreichen einer vorgegebenen Füllhöhe die Zufuhr an Schaumstoffflocken 3, 4 in die Wägebehälter 7, 8 unterbrochen werden.

Es können dazu an den Wägebehältern 7, 8 entsprechende Meßzellen angebracht werden, beispielsweise Lichtschranken, die z.B. bei dauernder Unterbrechung automatisch die Zufuhr an Schaumstoffflocken 3, 4 abstellen.

Nach erfolgter Wägung der Schaumstoffflocken 3, 4 werden diese einem Mischer 13 übergeben. Gleichzeitig können diesem Mischer 13 bei Verwendung von Bindemitteln letztere aus entsprechenden Vorratsbehältern 14, 15 zugeführt werden. Wie bereits erwähnt, können sowohl ein- als auch mehrkomponentige Bindemittel verwendet werden, sodaß sich die Anzahl der Vorratsbehälter 14, 15 danach entsprechend richten kann und die in Fig. 1 dargestellte Anzahl von zwei Vorratsbehältern 14, 15 nicht zwingend für die erfindungsgemäße Vorrichtung 1 ist.

Bei Verwendung von Polyurethanschaumstoffflocken ist es z.B. möglich, als Bindemittel ein Präpolymer aus einem Polyol 16 im Vorratsbehälter 14 und einem Polyisocyanat 17 im Vorratsbehälter 15 zu verwenden. Es wird auf diese Weise wiederum bekanntlich ein Polyurethanschaumstoff zwischen den Schaumstoffflocken 3, 4 erzeugt, wobei die Aufschäumung entsprechend dem Stand der Technik erfolgen kann, z.B. unter Verwendung eines Reaktionsmediums, beispielsweise Wasser, als Treibmittel und/oder Zufuhr von Wärme, z.B. mittels Dampf.

In der erfindungsgemäßen Vorrichtung 1 können unterschiedlichste Typen von Mischer 13 verwendet werden, wie auch im folgenden noch näher dargelegt wird. So ist es z.B. möglich, daß der Mischer 13 als sogenannter Statikmischer, d.h. ohne bewegte Teile ausgeführt wird. Dazu können in dem Mischer 13 verschiedenste Einbauten angeordnet werden, mit deren Hilfe eine Richtungsänderung der beförderten Schaumstoffflocken 3, 4 auf dem Weg durch den Mischer 13 erreicht wird. Die Förderung kann z.B. mit Luft erfolgen. Andererseits ist es natürlich ebenso möglich, Stetigförderer, z.B. Schwingförderer, Förderbänder etc. einzusetzen.

Weiters ist es möglich, im Mischer 13 unterschiedlichste Rührwerke anzuordnen, mit deren Hilfe die Schaumstoffflocken 3, 4 nach statistischen Kurven im Mischer 13 verteilt werden und insbesondere auch die Schaumstoffflocken 3, 4 mit unterschiedlichem Raumgewicht untereinander vermischt werden.

Selbstverständlich besteht aber auch die Möglichkeit, andere Mischer 13 mit bewegten Teilen in der Vorrichtung 1 anzuordnen. So ist es z.B. möglich, Mischer 13 einzusetzen, welche auf zumindest einer Welle ein- oder mehrere Mischblätter aufweisen. Diese Mischblätter können auch so ausgebildet sein, daß sie untereinander verbunden sind und auf diese Weise ein schneckenförmiger Mischer 13 entsteht. Im Falle von Schneckenmischem ist es möglich, mehrere Mischerwellen, z.B. zwei, nebeneinander anzuordnen und diese gleichläufig bzw. gegenläufig zu betreiben. Darüber hinaus ist es im Falle von Schneckenmischem möglich, auf einer Welle mehrere Schneckengänge, z.B. zwei, anzuordnen, wobei diese Schneckengänge so ausgebildet sein können, daß zumindest einer das Mischgut nach außen, d.h. in Richtung der Seitenwände des Mischers 13 befördert, und der zweite Schneckengang das Mischgut in Richtung auf die Mittelachse, d.h. nach innen fördert.

Die Verwendung derartiger Mischer mit auf einer Welle angeordneten Mischschnecken, von denen eine nach außen und die andere nach innen fördert, hat sich in bezug auf das erreichte Mischergebnis, d.h. eine möglichst homogene Verteilung von Präpolymer und Schaumstoffflocken, als vorteilhaft erwiesen.

Weitere bekannte Mischertypen sind ebenfalls einsetzbar und können darüber hinaus in der erfindungsgemäßen Vorrichtung 1 mehrere Mischer 13 angeordnet sein, beispielsweise zur Erzielung einer Grobmischung, z.B. vor der Vermischung mit dem Bindemittel. Es kann aber auch in Produktionsrichtung gesehen dem Mischer 13 zumindest ein weiterer Mischer nachgeordnet sein.

Die Vermischung der Schaumstoffflocken 3, 4 mit dem Bindemittel kann abgesehen von der zur Fig. 1 beschriebenen Ausführungsvariante an unterschiedlichsten Stellen der Vorrichtung 1 erfolgen. So ist es z.B. möglich, die Vermischung im in Fig. 1 nicht dargestellten Befüllrohr für die Form vorzunehmen bzw. kann, wenn zur Förderung der Schaumstoffflocken 3, 4 Luft verwendet wird, die Vermischung auch im Fördergebläse erfolgen. Daneben kann aber auch eine Aufteilung bei Verwendung eines Zweikomponentenbindemittels, wie beispielsweise in Fig. 1 dargestellt, der Zumischung der einzelnen Komponenten durchgeführt werden. So ist es z.B. möglich, eine erste Komponente, z.B. das Polyol 16, den Schaumstoffflocken 3, 4 im Befüllrohr zuzumischen und eine zweite Komponente, z.B. das Polyisocyanat 17, erst im Werkzeug, d.h. in der Form 10 zuzugeben. Dies kann z.B. in Form eines Sprühnebels oder dgl. erfolgen. Durch diese Arten der Vermischung lassen sich auf vorteilhafte Weise gleichmäßige Materialeigenschaften erreichen und ist darüber hinaus eine bessere Befüllung von Problemstellen in der Form 10, d.h. Stellen, die während des Befüllvorganges nicht ausreichend erreicht werden können, möglich. Darüber hinaus sind keine zusätzlichen Mischer 13 erforderlich und kann ein vorzeitiges Aushärten des Bindemittels verhindert werden und ist weiters damit eine geringere Verschmutzung der gesamten Vorrichtung 1 erreichbar, wodurch wiederum der Wartungsaufwand in der Vorrichtung 1 gesenkt werden kann.

Bei Verwendung einer Eintragsschnecke zur Befüllung der Form 10 kann die Vermischung in dieser durchgeführt werden, wodurch wiederum gleichmäßigere Materialeigenschaften erzielbar sind sowie kein weiterer zusätzlicher Mischer erforderlich ist. Ebenfalls vorteilhaft ist bei dieser Variante, daß die Vorrichtung 1 in ihrem Aufbau einfacher ausgeführt sein kann und daß wiederum kein aushärtendes Material an Stellen vorgelegt wird, die im Verfahrensablauf nicht unmittelbar vor der Form 10 liegen.

Bei Vermischung der Schaumstoffflocken 3, 4 im Werkzeug, d.h. im vorliegenden Fall der Form 10, ist die Zudosierung z.B. durch Nadelinjektion möglich und kann dabei gleichzeitig eine Vermischung mit Dampf und/oder Wasser zum Aufschäumen der Primärrohstoffe, z.B. für Polyurethanschaumstoffe, durchgeführt werden. Die Verdüsung kann über Bohrungen im Werkzeug erfolgen. Wiederum ist damit ein einfacher Aufbau der Vorrichtung 1 erreichbar und kann ein Großteil der Bestandteile der Vorrichtung 1 weitestgehend vor unerwünschten Verschmutzungen geschützt werden.

Eine weitere Methode besteht darin, daß die Schaumstoffflocken 3, 4 und/oder das Bindemittel elektrisch gegensinnig aufgeladen werden und in der Folge eine elektrostatische Vermischung durchgeführt wird. Es ist damit eine gleichmäßige Vermischung der Rohstoffe bei gleichzeitiger Verringerung des Bindemittelanteils möglich. Die Aufladung der Rohstoffe kann mit Methoden, wie sie aus dem Stand der Technik, z.B. aus Entstaubungsanlagen, bekannt sind, durchgeführt werden.

Das Bindemittel kann weiters in Pulverform zugesetzt werden, wobei diese Pulver wiederum ein- oder mehrkomponentig ausgebildet sein können. Durch die Möglichkeit der Trockenmischung kann auf eine Verdüsung des Bindemittels verzichtet werden, wodurch der Verschmutzungsgrad der Vorrichtung 1, insbesondere aufgrund vorzeitig aushärtender Bindemittel, verringert werden kann.

Wie bereits eingangs erwähnt, besteht aber auch die Möglichkeit, auf ein zusätzliches Bindemittel zu verzichten, beispielsweise indem die Oberfläche der Schaumstoffflocken 3, 4 z.B. mit Warm- oder Heißluft soweit erwärmt wird, daß eine Verschmelzung der Schaumstoffflocken 3, 4 möglich wird. Andererseits können aber auch z.B. mit Reaktivgasen funktionelle Gruppen im Oberflächenbereich, z.B. Hydroxidgruppen, gegebenenfalls unter Temperaturanwendung soweit umgesetzt werden, daß eine direkte Verbindung der einzelnen Schaumstoffflocken untereinander möglich wird.

Auch für diese beiden zuletzt genannten Varianten ist das erfindungsgemäße Verfahren auf vorteilhafte Weise einzusetzen. Zwar ist damit der Vorteil der weiteren Verringerung des Bindemittelanteils nicht mehr gegeben, jedoch ist es durch Messung des Gewichtes mehrerer Einzelfraktionen bezogen auf das Gesamtvolumen des Werkzeuges möglich, sehr einheitliche Raumgewichte für gleichartige Schaumstoffprodukte 2 zu erreichen, indem wiederum durch Variation des Verhältnisses der Fraktionen an Schaumstoffflocken 3, 4 unterschiedlichen Raumgewichtes das erwünschte Raumgewicht eingestellt wird.

Selbst bei Verwendung von Schaumstoffflocken 3, 4 mit relativ einheitlichem Raumgewicht besteht immer noch der Vorteil des erfindungsgemäßen Verfahrens bzw. der Vorrichtung 1 darin, daß über diese Art der Dosierung, insbesondere die Wägung, auch auf unterschiedlichste Flockengrößen, wie sie üblicherweise bei der Vermahlung der Sekundärrohstoffe anfallen, Rücksicht genommen werden kann und so gegebenenfalls auf eine Aussiebung der Schaumstoffflocken 3, 4 verzichtet werden kann.

Die fertige Mischung an Schaumstoffflocken 3, 4 und Bindemittel wird in der Folge, wie bereits erwähnt, in ein Werkzeug, z.B. die Form 10, eingebracht. Diese Form 10 kann aber so ausgebildet sein, daß ein sogenannter Blockschaum entsteht bzw. können Formen 10 verwendet werden, welche bereits die Endkonturen eines Schaumstoffproduktes 2 aufweisen. D.h. also, daß auf diese Weise auch Formteile hergestellt werden können.

Es sei bereits an dieser Stelle erwähnt, daß es selbstverständlich möglich ist, das erfindungsgemäße Verfahren bzw. die Vorrichtung 1 auch in kontinuierlich arbeitenden Verschäumungsanlagen zur Herstellung von Blockschäumen, wie sie aus dem Stand der Technik bekannt sind, einzusetzen.

Die Befüllung der Form 10 kann wiederum auf unterschiedlichste Arten erfolgen, wobei die ausgewählte Methode nicht nur auf die Gesamtkonzeption der Vorrichtung 1 ausgerichtet sein kann, sondern darüber hinaus auch auf bestimmte Schaumstoffprodukte 2 Rücksicht genommen werden kann. So besteht z.B. die Möglichkeit, eine Spiral- oder Schneckenbefüllung der Form 10 vorzunehmen. Dazu ist selbstverständlich dem Mischer 13 nachgeordnet und der Form 10 vorgeordnet ein Schneckenförderer vorzusehen. Der Vorteil, der sich mit dieser Art der Befüllung erreichen läßt ist, daß die Abluft aus der Form 10 z.B. im Vergleich zur Luftstrombefüllung verringert werden kann und damit auch der Staubaustrag aus dem Werkzeug weitestgehend vermieden werden kann. Vorteilhafterweise wird diese Art der Befüllung in jenen Vorrichtungen 1 angewendet, welche nicht zum Ausstoß großer Tagesproduktionen verwendet werden.

Eine weitere Verfahrensvariante besteht darin, daß eine Kolbenbefüllung vorgenommen wird. Dazu ist der Form 10 ein entsprechender Behälter, z.B. ein Füllbehälter (in Fig. 1 nicht dargestellt) vorgeordnet, welcher vorzugsweise ein Volumen aufweist das dem Volumen des Formhohlraumes entspricht. Diese Beziehung der Volumina ist jedoch nicht absolut zu sehen. Beispielsweise ist es möglich, im Füllbehälter ein größeres Volumen an einzufüllender Mischung vorzulegen und kann damit einerseits erreicht werden, daß die Form 10 sicher zur Gänze befüllt wird, selbst wenn Teile der Mischung im Füllbehälter verbleiben. Andererseits ist es damit möglich, Schaumstoffprodukte 2 mit höheren Verdichtungsgraden zu erzeugen, indem in die Form ein Freischaumvolumen, d.h. ein Volumen an Schaumstoffflocken 3, 4 vermischt mit Bindemittel im unkomprimierten Zustand eingefüllt wird, und vor der Aufschäumung des Bindemittels bzw. generell der Reaktion des Bindemittels gegebenenfalls mit den Schaumstoffflocken 3, 4 zumindest in einzelnen Bereichen der Form 10 eine Verdichtung, z.B. durch Verstellung unterschiedlicher Formflächen bzw. Bereiche dieser Formflächen vorzunehmen. Auf die Menge bezogen kann dabei eine fertige Mischung mit einem Gewicht vorgelegt werden, welches z.B. im Bereich zwischen 3 und 15 %, bevorzugt zwischen 5 und 10 %, über dem erforderlichen Gewicht für die vollständige Befüllung der Form liegt. Der Vorteil, der sich mit der Kolbenbefüllung erreichen läßt ist, daß bei höheren Raumgewichten für zu fertigende Schaumstoffprodukte 2 eine bessere Mengendosierung möglich ist und darüber hinaus die Geschwindigkeit der Befüllung der Form 10 im Vergleich zur Spiral- bzw. Schneckenbefüllung gesteigert werden kann. Sollte es bei der Kolbenbefüllung zu einer ungleichmäßigen Befüllung der Form 10 kommen, beispielsweise in den Ecken bzw. Randzonen der Form 10, so kann vor dem Aushärten des Bindemittels eine Vergleichmäßigung der eingefüllten Mischung, z.B. unter Einblasen von Luft, erfolgen.

Wie bereits erwähnt, besteht weiters die Möglichkeit, die Mischung aus Schaumstoffflocken 3, 4 mit Bindemittel mittels eines Luftstromes zu befördern und die Form 10 auf diese Art zu füllen.

Bei dieser Art der Formbefüllung kann die Form 10 über mehrere Ausströmöffnung für die Förderluft verfügen, wodurch das Rohstoffgemisch, also die mit dem Prepolymer vermengten Schaumstoffflocken 3, 4 während des Füllvorganges zumindest annähernd in Schweben gehalten werden kann und damit eine unbeabsichtigte Vorverdichtung in den im bezug auf die Einströmöffnungen gegenüberliegenden Bereichen der Form 10 zumindest großteils vermieden werden kann.

Umgekehrt kann aber auch durch Anlegen eines Vakuums die Mischung in den Formhohlraum 9 verbracht werden. Es ist damit eine sehr schnelle Befüllung der Form 10 erreichbar. Darüber hinaus können mit dieser Art der Befüllung auch bereits angesprochene Problemstellen der Form 10 mit großer Sicherheit befüllt werden und ist schließlich auch die Reinigung des Füllwerkzeuges sowie der Form 10 einfach durchzuführen.

Weiters kann die Befüllung in mehreren Schritten erfolgen. Dadurch ist es möglich, den Füllvorgang zu unterbrechen, beispielsweise um Verstärkungsteile oder dgl. in die Form einzulegen.

Des weiteren kann die Befüllung selbstverständlich auch durch mehrere Befüllöffnungen durchgeführt werden, wodurch kürzere Befüllrohre verwendet werden können. Darüber hinaus ist es möglich, z.B. bei Verwendung mehrerer Befüllrohre diese in eine möglichst große Füllöffnung münden zu lassen, wodurch wiederum eine sehr schnelle Befüllung der Form und damit eine hohe Tagesproduktion erreichbar ist.

Für die Dosierung einer bestimmten Menge bzw. eines bestimmten Volumens an fertiger Mischung in die Form 10 kann neben der Verwendung oder in von Ergänzungen zu bereits angesprochenen Füllbehältern auch auf vorteilhafte Weise eine Zellradbefüllung z.B. des offenen Werkzeuges vorgenommen werden. Dadurch ist eine sehr einheitliche Mengensteuerung erreichbar und kann auf diese einfache Art und Weise eine stufenweise Befüllung der Form 10 verwirklicht werden.

Schließlich sei noch erwähnt, daß selbstverständlich auch eine händische Befüllung, beispielsweise bei Formteilen mit komplizierten Konturen, möglich ist.

Nach Aushärtung des Bindemittels, wobei die Härtung, wie bereits erwähnt, auf verschiedenste Arten durchgeführt werden kann, je nach Bindemitteltyp, z.B. durch Zugabe von Wasser bzw. Wasserdampf und/oder Temperaturerhöhung und/oder Druckanwendung, wird das fertige Schaumstoffprodukt 2 gegebenenfalls nach einer gewissen Haltezeit entformt und können in der Folge weitere erforderliche, aus dem Stand der Technik bekannte Verarbeitungsschritte anschließen bzw. das Schaumstoffprodukt 2 bis zur Auslieferung gelagert werden.

In der soeben beschriebenen ersten Ausführungsvariante wird die Vereinheitlichung des Raumgewichtes der Schaumstoffprodukte 2 dadurch erreicht, daß das Verhältnis unterschiedlicher Raumgewichtsfraktionen an Schaumstoffflocken 3, 4 durch Wägung der Einzelfraktionen aufeinander und insbesondere auf das gewünschte Raumgewicht abgestimmt wird.

In einer weiteren Ausführungsvariante der Erfindung ist es möglich, nicht auf ein konstantes Volumen der Wägebehälter abzuzielen, sondern vielmehr ein konstantes Gewicht an Schaumstoffflocken 3, 4 vorzulegen und das Volumen zu bestimmen. In zur ersten Ausführungsvariante ähnlicher Art und Weise kann in der Folge durch Variation des Volumens wiederum ein sehr einheitliches Raumgewicht der Schaumstoffprodukte 2 bereitgestellt werden. Das so bestimmte Volumen kann mit Hilfe einer EDV-Unterstützung, wie dies auch zur ersten Ausführungsvariante möglich ist, verarbeitet und daraus der zu dosierende Anteil an Bindemittel errechnet werden. Die für eine Befüllung der Form 10 ausreichende Menge kann in der Folge in einem eigenen Mischbehälter mit dem Bindemittel vermischt werden und erweist es sich als Vorteil, wenn die fertige Mischung in einem eigenen Zwischenlagebehälter vor Befüllung der Form 10 aufbewahrt wird. Zur Bestimmung der Einzelvolumina können Behälter verwendet werden, die über ihre Außenfläche verteilt mehrere Meßzellen zur Bestimmung der Füllhöhe aufweisen. Andererseits ist es möglich, höhenverstellbare Meßzellen zu verwenden. Damit wiederum eine gleichmäßig Befüllung, d.h. ebene Befüllfläche anstelle einer sogenannten Haufenbildung entsteht, kann eine Vergleichmäßigung der Befüllung durch z.B. Einblasen von Luft oder aber auch durch Abtrennung der obersten Schichten der Schaumstoffflocken 3, 4 im Meßbehälter durchgeführt werden. Selbstverständlich kann aber auch eine einheitliche Füllhöhe z.B. dadurch erreicht werden, daß eine Kombination von Lufteinblasen mit gleichzeitiger Verstellung eines Behälterdeckels durchgeführt wird.

Obwohl bis jetzt immer von zwei unterschiedlichen Fraktionen ausgegangen wurde, ist es ebenso möglich, mehrere Fraktionen, sei es mit unterschiedlichem Gewicht und/oder Volumen in der Produktion der Schaumstoffprodukte 2 einzusetzen.

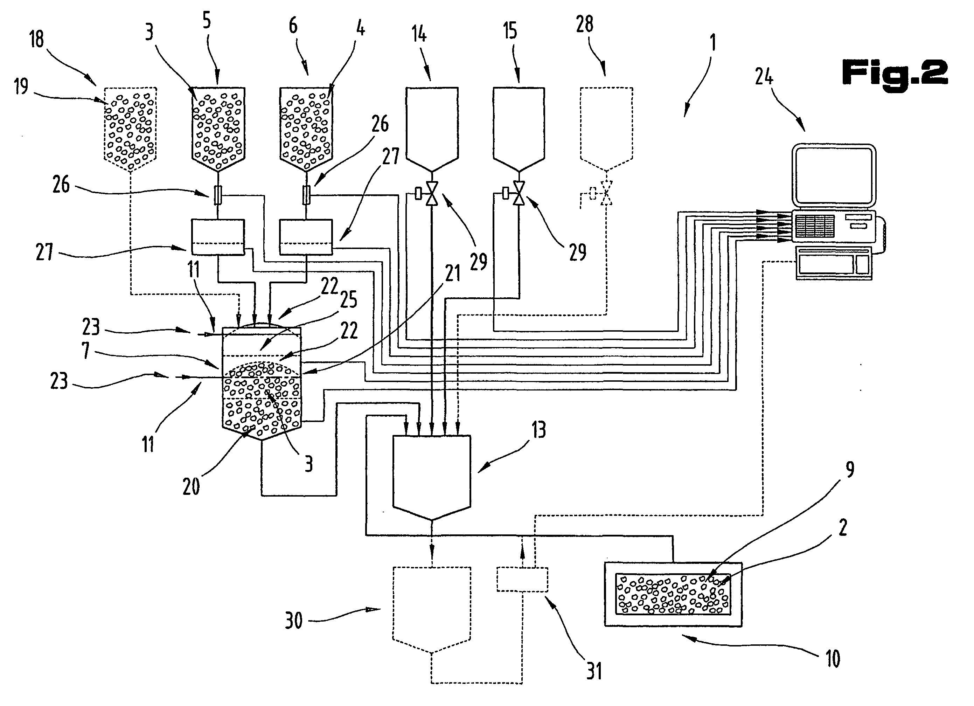

In Fig. 2 ist eine weitere Ausführungsvariante der erfindungsgemäßen Vorrichtung 1 gezeigt.

Wiederum können mehrere Vorratsbehälter 5, 6 für die Schaumstoffflocken 3, 4 angeordnet sein bzw. können weitere Vorratsbehälter 18, wie strichliert angedeutet, für Schaumstoffflokken 19 oder dgl. vorhanden sein.

Der Unterschied zur Ausführungsvariante nach Fig. 1 besteht im wesentlichen darin, daß nicht pro Vorratsbehälter 5, 6, 18 ein eigener Wägebehälter 7, 8 nach Fig. 1 verwendet wird, sondern die einzelnen Fraktionen einem gemeinsamen Wägebehälter 7 zugeführt werden. Die Beförderung der Schaumstoffflocken 3, 4, 19 in den Wägebehälter 7 kann auf unterschiedlichste Art durchgeführt werden, beispielsweise ist eine Vordosierung unter Verwendung einer Zellradschleuse möglich. Einsetzbar sind aber auch Schneckenförderer, Bandförderer, Luftförderer oder dgl.

Wie in Fig. 2 strichliert bzw. strichpunktiert im Wägebehälter 7 angedeutet, kann dieser unterteilt werden, sodaß zur Durchführung des Verfahrens z.B. in einem ersten Schritt ein unterer Bereich 20, der bis zur strichpunktierten Linie 21 reichen kann, mit Schaumstoffflocken 3 aus dem Vorratsbehälter 5 soweit gefüllt wird, daß nach Abtrennung eines Haufens 22 z.B. wiederum mittels Schieber 11, wie durch Pfeil 23 angedeutet, der gesamte untere Bereich 20 zumindest annähernd mit Schaumstoffflocken 3 gefüllt ist.

Durch das Einschieben des Schiebers 11 in den Wägebehälter 7 nach Befüllung des unteren Bereiches 20 wird also durch die Abtrennung des Haufens 22 erreicht, daß stets ein vorbestimmbares Volumen, welches z.B. dem halben Volumen entsprechen kann, welches pro Mischvorgang, d.h. die Vermischung mit dem Bindemittel insbesondere mit dem Prepolymer, verarbeitet werden kann, zur Auswägung der darin befindlichen Schaumstoffflocken 3 zur Verfügung steht.

In der Folge wird das Gewicht der Füllung dieses Bereiches 20 bestimmt und das Ergebnis z.B. einer Datenverarbeitungsanlage 24 zugeführt. Vorteilhafterweise ist jener Bereich 20, dessen Füllgewicht bestimmt wird, vom Rest des Vorratsbehälters insbesondere mechanisch trennbar ausgeführt, also beispielsweise vom oberen Bereich 25 des Wägebehälters 7 trennbar, z.B. nach unten in bezug auf diesen oberen Bereich des Wägebehälters 7 verfahrbar ist, sodaß z.B. eine Mitwägung des Haufens 22 verhindert werden kann. Danach erfolgt, wie bereits beschrieben, die Befüllung eines oberen Bereiches 25 mit Schaumstoffflocken 4 aus dem Vorratsbehälter 6 und werden diese Daten wiederum der Datenverarbeitungsanlage 24 zur Verfügung gestellt, welche daraus schließlich das Mischungsverhältnis für die nächste Mischung errechnet, selbstverständlich unter Bezug des Soll-Raumgewichtes des Schaumstoffproduktes 2. Der Haufen 22 aus Schaumstoffflocken 3 kann vor Befüllung des Bereiches 25 aus dem Wägebehälter 7 zumindest teilweise entfernt werden bzw. ist es selbstverständlich möglich, die zweite Fraktion an Schaumstoffflocken 4 aus dem Vorratsbehälter 6 mit diesen Schaumstoffflocken 3 zu "verunreinigen" und damit bei der zweiten Gewichtsbestimmung der Befüllung des Bereiches 25 mitzuwägen. Es ist sowohl möglich, das Gewicht bzw. das Volumen der zweiten Raumgewichtsfraktion getrennt von der ersten oder gemeinsam mit dieser zu bestimmen. Bei letzterer Variante wird der Schieber 11 wieder entfernt, sodaß die zweite Raumgewichtsfraktion direkt auf die erste eingefüllt wird.

Zwar besteht bei der direkten Befüllung des oberen Bereiches 25 auf den unteren Bereich 20 des Wägebehälters 7 die Problematik, daß die Schaumstoffflocken 3 im unteren Bereich 20 aufgrund des Eigengewichtes der Schaumstoffflocken 3, 4 im gesamten Wägebehälter 7 einer bestimmten Komprimierung unterliegen und damit hinsichtlich des Volumens des Wägebehälters 7 der obere Bereich 25 aufgrund des Nachgebens der Schaumstoffflocken 3 im unteren Bereich 20 "verfälscht" wird, sodaß also letztendes der Anteil an Schaumstoffflocken 4 an der Gesamtmischung an Schaumstoffflocken 3, 4 um einen bestimmten Prozentsatz in bezug auf die Gesamtmischung der Schaumstoffflocken 3, 4 überhöht ist, jedoch besteht die Möglichkeit, diese Vorkomprimierung und damit Verfälschung des Meßergebnisses rechnerisch mitzuberücksichtigen, beispielsweise unter Zuhilfenahme der Datenverarbeitungsanlage 24 und einen entsprechenden Korrekturfaktor zu errechnen und die Befüllung des oberen Bereiches 25 entsprechend diesem Korrekturfaktor durchzuführen.

Andererseits besteht vorteilhafterweise auch die Möglichkeit, wie bereits angesprochen, das Teilvolumina, beispielsweise 2 in bezug auf das verarbeitbare Volumen im Mischer 3, in den Wägebehälter 7 eingefüllt und nach Auswägung aus diesem entfernt werden, sodaß also die Vorkomprimierung der Schaumstoffflocken 3 durch Auffüllung des oberen Bereiches 25 mit Schaumstoffflocken 4 bei dieser Variante nicht auftritt. Damit kann aber auch der Vorteil erreicht werden, daß der Wägebehälter 7 in bezug auf seine Größe verkleinert werden kann, insbesondere da nicht das gesamte Volumen des oberen Bereiches 25 benötigt wird. Vorteilhafterweise wird jedoch auch bei dieser Variante der Schieber 11 zur Abtrennung des Haufens 22 aus Schaumstoffflocken 3, 4 verwendet, sodaß wiederum stets ein konstantes Volumen unabhängig von der Menge an eingefüllten Schaumstoffflocken 3, 4 im Wägebehälter 7 zur Verfügung steht und durch Entfernen des unteren Bereiches 20 des Wägebehälters 7 für die Messung vom oberen Bereich 25 für den Wägevorgang zur Verfügung steht.

Auch bei der Ausführungsvariante nach Fig. 2 kann zumindest eine Meßzelle zur Ermittlung der Füllhöhe an Schaumstoffflocken 3, 4 im Wägebehälter 7 diesem zugeordnet sein, sodaß die Befüllung des Wägebehälters 7 automatisch unterbrochen wird, sobald eine vordefinierte Füllhöhe überschritten wird. Über diese Füllhöhe kann auch die Mengendosierung der Schaumstoffflocken 3, 4 in den Wägebehälter 7 erfolgen, z.B. mittels der Datenverarbeitungsanlage 24, und kann dabei auch die Höhe der Haufen 22 mitberücksichtigt werden, d. h. die effektive Füllhöhe bzw. das daraus resultierende Füllgewicht um diesen Wert entsprechend korrigiert werden.

In der Vorrichtung 1 können als Meßbehälter ausgebildete Wägebehälter 7 bzw. Behälter zur Volumsbestimmung verwendet werden, deren Volumen einem Vielfachen, z.B. dem Zweifachen des Volumens des Formhohlraumes 9 und/oder des Mischers 13 entspricht. Dadurch kann u.a. erreicht werden, daß die Zeit für die Messung der Raumgewichtsfraktionen und/oder die anschließende Mischung der Schaumstoffflocken 3, 4 bei gleichbleibender Taktzeit des Ausstoßes von fertigen Schaumstoffprodukten 2 aus der Form 10 verlängert wird, und somit der Grad der Vergleichmäßigung der Mischung weiter verbessert werden kann.

Die Befüllung der beiden Teilvolumina der Bereiche 20, 25 muß nicht zwingend zur Gänze erfolgen, insbesondere dann, wenn sich herausstellt, daß aufgrund der Raumgewichte der Schaumstoffflocken 3, 4 eine der beiden Flockenfraktionen im Verhältnis zur anderen mengenmäßig verringert werden muß.

Obwohl auch bei dieser Ausführungsvariante wiederum mehrere Vorratsbehälter 14, 15 für das Bindemittel angeordnet sind, können selbstverständlich vorab genannte Methoden zur Verbindung der Schaumstoffflocken 3, 4 angewendet werden.

Es sei an dieser Stelle auch noch erwähnt, daß auch für den oberen Bereich 25 eine Abtrenneinrichtung, z.B. ein Schieber 11, der entsprechend Pfeil 23 eingeschoben wird, um den weiteren Haufen 22, resultierend aus der zweiten Befüllung, abzutrennen und nicht mitzuwägen, angeordnet sein kann.

Aus dem Wägebehälter 7 werden die Schaumstoffflocken 3, 4, je nachdem welche Verfahrensweise gewählt wird, in einem einzigen Schritt oder getrennt, d.h. die entsprechend bestimmten Mengen an Schaumstoffflocken 3 und 4 hintereinander dem Mischer 13 zugeführt. Vorteilhaft ist dabei, wenn die Einfüllung der Schaumstoffflocken 3, 4 in den Mischer 13 an die Taktzeit der Vorrichtung 1 eingepaßt ist, bzw. wenn die Zudosierung an dem Bindemittel, also z.B. dem Prepolymer für einen Polyurethanschaum, welches einkomponentig, d.h. ein Polyol in welchem bereits eine Polyisocyanatkomponente enthalten ist, oder zweikomponentig ausgeführt sein kann, an diese Taktzeit der Vorrichtung 1 angepaßt wird. Damit kann ein frühzeitiges Vermischen der Schaumstoffflocken 3, 4 mit dem Bindemittel vermieden werden, wodurch in der Folge ein frühzeitiges Aushärten des Bindemittels, beispielsweise durch Reaktion mit der Luftfeuchtigkeit aus der Umgebungsluft und somit auch die Verschmutzung, beispielsweise Verkrustung, des Mischers 13, bzw. dessen beweglichen Teilen verringert werden kann, wodurch sich die Reinigungsintervalle entsprechend verlängern lassen. Insbesondere erweist sich diese Vorgangsweise als vorteilhaft, wenn nach dem Mischer 13 ein Pufferbehälter für fertiges Rohstoffgemisch aus mit Bindemittel vermischten Schaumstoffflocken 3, 4 in der Vorrichtung 1 angeordnet ist, sodaß sich der Befüllvorgang des Mischers 13 mit Schaumstoffflocken 3, 4 und/oder Bindemittel entsprechend dem Füllstand an Rohstoffgemisch im Pufferbehälter 30 orientieren kann.

Von Vorteil ist dabei auch, Mischer 13 in einer Größenordnung zu verwenden, daß eine vollständige Befüllung des Volumens des Mischers 13 nicht erforderlich ist, wodurch sich, durch eine vorbestimmbare Anordnung der Sprühdüsen für das Bindemittel im Bereich des Mischers 13, eine bessere Durchmischung des Bindemittels mit den Schaumstoffflocken 3, 4 erreichen läßt. Von Vorteil ist dabei weiters, die Sprühdüsen für das Bindemittel nicht direkt auf die Mischorgane, beispielsweise die Förderschnecken zu richten, wodurch die Verschmutzung dieser Mischorgane wiederum verringert werden kann.

Der Mischer 13 kann bei der Ausführungsvariante nach Fig. 2 entsprechend den Ausführungen zur Ausführungsvariante nach Fig. 1 ausgebildet sein, insbesondere als Mischer mit nach außen und innen im obigen Sinne fördernden Mischschnecken ausgerüstet sein.

Den Vorratsbehältern 5, 6 für die Schaumstoffflocken 3, 4 nachgeordnet und dem Mischer 7 vorgeordnet kann neben einer Steuereinrichtung 26, die mit der Datenverarbeitungsanlage 24 verbunden ist und mit deren Hilfe die Zufuhr eines bestimmten Teiles an Schaumstoffflocken 3, 4 in den Wägebehälter 7 geregelt werden kann, auch noch ein Sortierer 27, z.B. ein Sieb, angeordnet sein, um z.B. Flocken einer bestimmten Größe auszusieben und damit die Einheitlichkeit des Schaumstoffproduktes 2 noch weiter zu vergrößern. Abgetrennte Schaumstoffflocken 3, 4 können in der Folge den in der Fig. 2 nicht dargestellten Mühlen zur weiteren Zerkleinerung wieder zugeführt werden.

Diese Sortierer 27 können ebenfalls, wie angedeutet, mit der Datenverarbeitungsanlage 24 verbunden sein und z.B. auch über eine eigene Wägevorrichtung verfügen, sodaß der Anteil an abgetrennten Schaumstoffflocken 3, 4 mengenmäßig bestimmt werden kann und gegebenenfalls eine Nachdosierung an Schaumstoffflocken 3, 4 für den Wägebehälter 7 erfolgen kann.

Weiters ist in Fig. 2 ein weiterer Vorratsbehälter 28 strichliert angedeutet, der z.B. weitere Hilfsstoffe oder aber auch funktionelle Zuschlagstoffe bzw. Füllstoffe enthalten kann. Die Anzahl an zusätzlichen Vorratsbehältem 18 bzw. 28 ist nicht auf die dargestellte Ausführungsform beschränkt. Es wird damit möglich, z.B. flammhemmende Mittel, antibakterielle Zuschlagstoffe oder dgl. dem Gemisch aus Schaumstoffflocken 3, 4 zuzumischen. Es sei erwähnt, daß sich das Verhältnis bzw. der Anteil an Bindemittel in der Größenordnung von 1 bis 20 Gew.-%, vorzugsweise 1 bis 5 Gew.-%, z.B. 2 bis 3 Gew.-% auf den Anteil an Schaumstoffflocken 3, 4, 19 bezieht, sodaß sich also dieses Verhältnis in Abhängigkeit von der Menge der weiteren Zuschlagstoffe entsprechend verändern kann. So ist es z.B. möglich, daß derartige Zuschlagstoffe sowohl eine Zusatzfunktion als auch die Funktion des Bindemittels teilweise übernehmen können, wodurch der restliche Bindemittelanteil entsprechend erniedrigt wird. Andererseits kann es erforderlich sein, auch für diese Zuschlagstoffe zusätzliche Bindemittel einzusetzen und kann dafür zur Bestimmung des mengenmäßigen Anteils an Zuschlagstoffen in der Linie Vorratsbehälter 28 - Mischer 13 und/oder Wägebehälter 7 wiederum eine eigene Wägevorrichtung (in Fig. 2 nicht dargestellt) angeordnet sein, die gegebenenfalls mit der Datenverarbeitungsanlage 24 verbunden ist, sodaß also das zuzusetzende Gewicht an Zuschlagstoffen gegebenenfalls bei der Berechnung an zuzusetzender Menge Bindemittel berücksichtigt werden kann.

Aufgrund der Genauigkeit der Dosierung der Schaumstoffflocken 3, 4 ist allerdings eine anteilsmäßige, d.h. mengenmäßige Bestimmung des Bindemittelanteils nicht zwingend erforderlich.

Bei Verwendung von flüssigen Bindemitteln können z.B. Ventile 29, welche wiederum mit der Datenverarbeitungsanlage 24 verbunden sein können, zeitabhängig geregelt werden, sodaß sich letztendlich die Menge an Bindemittel aus dem durchgelassenen Volumenstrom und der Zeit der Öffnung der Ventile 29 errechnen läßt.

In kontinuierlich arbeitenden Anlagen ist es weiterhin möglich, daß ein ständiger Volumenstrom an diesen Ventilen 29 eingestellt wird, der dem-Mischer 13 zugeführt wird.

Weiters ist zu dieser Ausführungsvariante nach Fig. 2 strichliert angedeutet, daß z.B. zwischen dem Mischer 13 und der Form 10 ein Pufferbehälter 30 angeordnet werden kann. Dieser Pufferbehälter 30 kann so dimensioniert werden, daß eine sichere Befüllung von zwei bis drei Formhohlräumen 9 möglich ist. Es kann in diesem Fall eine weitere Wägeeinrichtung 31 zwischen dem Pufferbehälter 30 und der Form 10 angeordnet sein, um damit z.B. das Füllgewicht für den Formhohlraum 9 zu bestimmen und eine weitestgehend konstante Füllmenge zu ermöglichen. Dazu kann auch diese weitere Wägeeinrichtung mit der Datenverarbeitungsanlage 24 verbunden sein.

Anstelle der Wägeeinrichtung kann aber auch z.B. eine zeitgesteuerte Schleuse verwendet werden, wobei die Zeitsteuerung von der Datenverarbeitungsanlage 24 übernommen werden kann und kann damit aufgrund z.B. der Zeit des Offenhaltens der Schleuse sowie eines eingestellten Volumenstromes von geförderter Mischung die Füllmenge für die Form 10 bestimmt bzw. geregelt werden. Diese Vorgehensweise ist insbesondere deswegen möglich, da aufgrund des erfindungsgemäßen Verfahrens im Pufferbehälter 30 bereits eine Mischung vorliegt, die ein weitestgehend einheitliches Raumgewicht aufweist, sodaß lediglich das Füllvolumen bzw. das Füllgewicht bestimmt werden muß.

Zur Bestimmung des Füllvolumens ist es aber auch möglich, Fördereinrichtungen bzw. Dosiereinrichtungen zu verwenden, die ein konstantes Füllvolumen automatisch dosieren. Z.B. ist die Anordnung einer Zellradschleuse entweder zwischen dem Mischer 13 und der Form 10 oder zwischen dem Mischer 13 und dem Pufferbehälter 30 oder zwischen der Form 10 und dem Pufferbehälter 30 möglich, wobei bekanntlich jede Zelle des Zellrades ein konstantes Volumen aufweist. Damit ist eine sehr genaue Dosierung zu erreichen, wobei die Befüllung gleichzeitig auch mehrschrittig erfolgen kann. Um ein Ankleben der unter Umständen bereits mit dem Bindemittel versehenen Flocken 3, 4, 19 zu vermeiden, kann die Zellradschleuse, insbesondere das Zellrad, entsprechend beschichtet sein, z.B. mit Teflon.

Andererseits ist es möglich, daß, wie bereits erwähnt, die Vermischung der Schaumstoffflokken 3, 4, 19 mit dem Bindemittel erst in der Form 10 bzw. kurz vor der Form 10 erfolgt. Auch für diesen Fall bietet eine Dosierung z.B. über ein Zellrad den Vorteil der Genauigkeit, das Zellrad selbst muß dabei jedoch nicht die genannte Beschichtung aufweisen.

Weitere Pufferbehälter 30 bzw. Wägeeinrichtungen 31 können in der erfindungsgemäßen Vorrichtung 1 angeordnet werden. Beispielsweise ist es möglich, Pufferbehälter zwischen dem Wägebehälter 7 und dem Mischer 13 vorzusehen. Des weiteren ist es möglich, daß bereits vor dem Wägebehälter 7 eine Grobwägung der Schaumstoffflocken 3, 4 jeweils individuell für die Vorratsbehälter 5, 6, 18 erfolgen kann und letztendlich im Wägebehälter 7 noch eine Feinwägung erfolgt.

Sämtliche bereits beschriebenen Methoden zur Befüllung der Form 10 bzw. zur Vermischung der Schaumstoffflocken 3, 4,19 mit dem Bindemittel bzw. gegebenenfalls weiteren Zuschlagstoffen kann nach den bereits vorab beschriebenen Methoden erfolgen, sodaß z.B. gegebenenfalls auf den Mischer 13 verzichtet werden kann, z.B. wenn eine Verdüsung des Bindemittels direkt in den Formhohlraum 9 erfolgt. Diese Variation der Befüllmethoden sowie Mischmethoden trifft selbstverständlich auch auf sämtliche weitere, im folgenden beschriebenen Ausführungsvarianten zu.

Von Vorteil ist, wenn zur Förderung des Rohstoffgemisches aus Schaumstoffflocken 3, 4 mit Bindemittel vom Mischer 13 bzw. dem Pufferbehälter 30 in das Füllrohr für den Formhohlraum 9 der Form 10 eine Zellradschleuse verwendet wird, wobei eine Antriebseinrichtung der Zellradschleuse mit einer Datenverarbeitungsanlage verbunden sein kann, z.B. der Datenverarbeitungsanlage 24, wodurch eine vorbestimmbare, variable Drehzahl des Zellrades während des Füllvorganges des Formhohlraumes erreicht werden kann. Diese variable Drehzahl kann je nach Formhohlraum 9 bzw. Schaumstoffprodukt 2 voreinstellbar bzw. verstellbar sein und erweist sich insbesondere in Hinblick auf das Fördermedium Luft zur Füllung des Formhohlraumes 9 mit dem Rohstoffgemisch den Druck dieses Fördermediums, d.h. also der Druck mit dem der Formhohlraum befüllt wird, an diesen bzw. das Schaumstoffprodukt 2 und/oder die Drehzahl des Zellrades anzupassen.

Zur weiteren Steigerung der Genauigkeit der Produkteigenschaften der Schaumstoffprodukte 2 bzw. als zusätzliche Kontrollmöglichkeit ist es möglich, zusätzlich eine Wägung nach der Vermischung der Schaumstoffflocken 3, 4, 19 mit dem Bindemittel durchzuführen. Dies kann durch Anordnung eines zusätzlichen Wägebehälters oder aber durch Ausrüstung z.B. des Mischers 13 mit der Wägeeinrichtung erfolgen. Es kann damit erreicht werden, daß die zudosierte Menge an Bindemittel bestimmt werden kann, wodurch gegebenenfalls über die Datenverarbeitungsanlage 24 die Ventile 29 geregelt werden können.

Je nach dem für welche Art an Schaumstoffprodukten 2, also beispielsweise Formteile oder Blockschäume, die Vorrichtung 1 verwendet wird, kann entweder ein Werkzeug zur Herstellung eines Schaumstoffproduktes 2 pro Vorrichtung 1 angeordnet sein bzw. ist es weiters möglich, mehrere Werkzeuge, d.h. Formen 10, auf einem Drehtisch anzuordnen und diese Formen 10 mit einer vorbestimmbaren Taktzeit dem Füllrohr, über welches das Rohstoffgemisch dem Formhohlraum zugeführt wird, in Eingriff zu bringen. Es erweist sich dabei von Vorteil, wenn für die Zuführung des Reaktionsmediums für das Bindemittel, beispielsweise Wasserdampf, Einrichtungen in der Vorrichtung 1 vorgesehen, welche zumindest annähernd die ständige Zufuhr des Reaktionsmittels in den Formhohlraum, unabhängig von der Taktzeit, ermöglichen.

Vorteilhaft ist auch, wenn in der Vorrichtung 1 entsprechende Vorkehrung getroffen werden, mit denen die Füllorgane für die Befüllung des Formhohlraumes 9 mit dem Rohstoffgemisch aus Schaumstoffflocken 3, 4 mit Bindemittel zwischen den einzelnen Füllvorgängen gesäubert werden. Insbesondere das Rohstoffgemisch zumindest teilweise aus dem Füllorgan entfernt wird.

Weiters ist schließlich noch eine Wägung direkt in der Form 10 möglich. Dazu kann mit Hilfe von Differenzwägungen der Anteil der jeweiligen Fraktion an Schaumstoffflocken 3 bzw. 4 bestimmt werden und können mittels Datenverarbeitungsanlage 24 die für den nächsten Takt zuzudosierenden Mengen an Schaumstoffflocken 3 bzw. 4 berechnet werden. Für diesen Fall ist es möglich, zur Gänze auf den Wägebehälter 7 zu verzichten.

Es ist weiters möglich, wie bereits erwähnt, die Vermischung der Schaumstoffflocken 3, 4, 19 direkt in der Form 10 durchzuführen, sodaß letztendlich auch der Mischer 13 nicht zwangsweise erforderlich ist. Für diese Variante der erfindungsgemäßen Vorrichtung werden in der Folge die Schaumstoffflocken 3, 4, 19 direkt in den Formhohlraum 9 ebenso wie das Bindemittel dosiert und sind dazu entsprechende Förderanlagen, wie bereits beschrieben, vorzusehen.

Anstelle einzelner Leitungen zu der Datenverarbeitungsanlage 24 ist es weiters möglich, ein Bussystem zu installieren.

Obwohl in den weiteren Ausführungsvarianten zur besseren Übersichtlichkeit die Datenverarbeitungsanlage 24 nicht dargestellt wird, ist deren Anordnung zur Regelung und/oder Steuerung einzelner Komponenten der Anlage bzw. der Gesamtanlage selbstverständlich möglich.

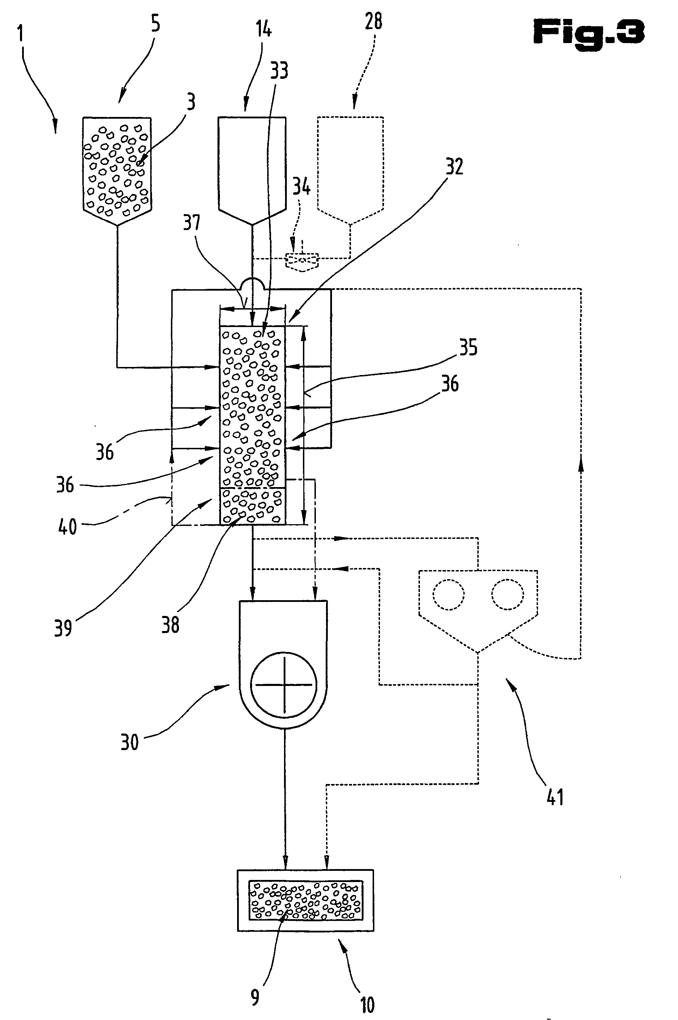

In Fig. 3 ist eine Ausführungsvariante der erfindungsgemäßen Vorrichtung 1 unter Verwendung einer Freifallmischstrecke 32 zur Vermischung der Schaumstoffflocken 3 aus dem Vorratsbehälter 5 gezeigt. Zur Vereinfachung der Darstellung wurde nur ein Vorratsbehälter 5 für Schaumstoffflocken 3 dargestellt und können selbstverständlich mehrere Vorratsbehälter 5 angeordnet werden bzw. ist diese Ausführungsvariante auch in bezug auf die Ausführungen zur Verwendung einheitlicher Schaumstoffflocken 3 zu sehen, wobei eine Beschränkung auf die Freifallmischstrecke 32 in letzterem Fall nicht zwingend gegeben ist.

Die Schaumstoffflocken 3 werden mit geeigneten Fördermitteln, z.B. Blasrohren, Stetigförderern, wie Schwingförderern, Bandförderern etc. der Freifallmischstrecke 32 in einem oberen Bereich 33 zugeführt. Zwischen der Freifallmischstrecke 32 und dem Vorratsbehälter 5 kann entsprechend den voranstehenden Ausführungen die entsprechende Wägevorrichtung beispielsweise zur Wägung mehrerer unterschiedlicher Fraktionen angeordnet sein, um damit das entsprechend gewünschte Raumgewicht der Schaumstoffflockenmischung bereitzustellen (in Fig. 3 nicht dargestellt).

Der Freifallmischstrecke 32 werden weiters einerseits das Bindemittel aus dem Vorratsbehälter 14 sowie gegebenenfalls weitere Zuschlagstoffe aus einem oder mehreren der Vorratsbehälter 28 zugeführt. Bei Verwendung mehrerer Zuschlagstoffe können diese beispielsweise vorab mit Hilfe einer geeigneten Mischeinrichtung 34, z.B. einem Rührwerk, insbesondere bei Verwendung zumindest eines flüssigen Zuschlagstoffes untereinander vermischt werden bzw. ist weiters eine Vermischung mit dem Bindemittel ebenfalls über Mischeinrichtungen 34 (in Fig. 3 nicht dargestellt) möglich, sodaß im wesentlichen eine fertige Mischung an Bindemittel und Zuschlagstoffen der Freifallmischstrecke 32 zur Verfügung gestellt wird.

Die Vermischung in der Mischeinrichtung 34 kann z.B. mit Rührwerken, Schnecken durch das Einblasen von Luft oder dgl. erfolgen.

Wie in Fig. 3 dargestellt, können über eine Länge 35 der Freifallmischstrecke 32 mehrere Eintragseinrichtungen 36 für das Bindemittel und/oder die Zuschlagstoffe bzw. das Gemisch aus Bindemittel und/oder Zuschlagstoffen angeordnet sein, sodaß eine sichere Vermischung der Schaumstoffflocken 3 mit Bindemittel und/oder Zuschlagstoffen über die Länge 35 der Freifallmischstrecke 32 erfolgt. Als Eintragseinrichtung 36 können für den Fall, daß das Bindemittel und/oder die Zuschlagstoffe in flüssiger Form vorliegen, z.B. Düsen verwendet werden. Es kann damit über eine Breite 37 der Freifallmischstrecke 32 eine Art Nebel erzeugt werden, der von den Schaumstoffflocken 3 auf dem Weg von ihrem Eintrag im Bereich 33 der Freifallmischstrecke 32 bis zum Austrag aus einem Bereich 38 der fertigen Mischung aus der Freifallmischstrecke 32 erreicht werden.

Für den Fall der Verwendung pulverförmiger Bindemittel und/oder Zuschlagstoffe kann der Eintrag letzterer auch über Luftförderung durch entsprechende Düsen ermöglicht werden.

Für den Fall, daß flüssige Bindemittel und/oder Zuschlagstoffe verwendet werden, besteht weiters die Möglichkeit, daß überschüssige Flüssigkeit an einer strichpunktiert in der Freifallmischstrecke 32 dargestellten Trenneinrichtung 39, z.B. einer Lochplatte, einem Sieb oder dgl. abläuft und diese entsprechend einer strichpunktierten Linie 40 wieder der Freifallmischstrecke 32 zur weiteren Verarbeitung zugeführt wird. Ebenso ist es möglich, wie strichliert angedeutet, daß zwischen dem Pufferbehälter 30, der zwischen der Freifallmischstrecke 32 und der Form 10 angeordnet sein kann, z.B. eine Presse 41 vorhanden ist, mit deren Hilfe überschüssiges Bindemittel und/oder überschüssige Zuschlagstoffe aus den Schaumstoffflokken entfernt werden. Diese Presse 41 kann z.B. als Walzenpresse ausgeführt sein. Das dabei abgetrennte Bindemittel und/oder die abgetrennten Zuschlagstoffe können, wie dargestellt, zum erneuten Einsatz entweder der Freifallmischstrecke 32 direkt oder aber auch dem bzw. den Vorratsbehältern 28 bzw. 14 zugeführt werden.

Der Pufferbehälter 30 verfügt bevorzugt wiederum über eine Zellradschleuse, sodaß eine Befüllung der Form 10 mit der Mischung mit einem konstanten Volumen einfach realisiert werden kann. Die Anordnung des Pufferbehälters 30 ist jedoch nicht zwingend und kann ein direkter Eintrag der Mischung aus Schaumstoffflocken 3 mit Bindemitteln und/oder Zuschlagstoffen direkt in den Formhohlraum 9 erfolgen.

Andererseits ist es ebenso möglich, daß der Ausgang der Presse 41 für die mit Bindemitteln und/oder Zuschlagstoffen vermischten Schaumstoffflocken 3 direkt in den Formhohlraum 9 mündet.

Die Anordnung entsprechender Fördervorrichtungen, wie z.B. Fallrohre, Blasrohre, Einfüllrohre, Schneckenförderer etc. zwischen den einzelnen Komponenten der Vorrichtung 1 ist sowohl bei dieser Ausführungsvariante, als auch bei den weiteren beschriebenen Ausführungsvarianten in den zugehörigen Fig. nicht dargestellt, da dies ohnehin dem Können des auf diesem Gebiet tätigen Fachmannes entspricht und wird er daher die entsprechenden, für seine Zwecke am besten geeigneten Fördervorrichtungen wählen.

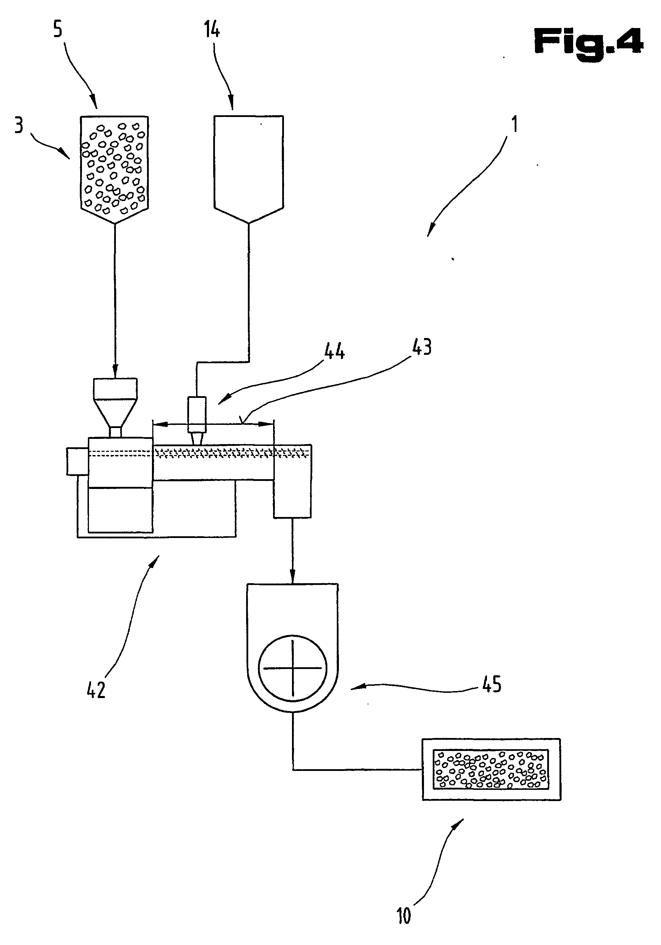

In Fig. 4 ist teilweise eine Ausführungsvariante der erfindungsgemäßen Vorrichtung 1 gezeigt, wobei auf die Darstellung bereits beschriebener Komponenten der Vorrichtung 1, z.B. des Wägebehälters 7, verzichtet wurde und können die entsprechenden Stellen zu deren Anordnung aus den bereits beschriebenen Ausführungsvarianten entsprechend übernommen werden.

Bei dieser Ausführungsvariante wird ein Schneckenmischer 42 zur Vermischung der Schaumstoffflocken 3 aus dem Vorratsbehälter 5 mit dem Bindemittel aus dem Vorratsbehälter 14 verwendet. Die Schaumstoffflocken 3 werden z.B. mit Hilfe eines Förderbandes oder aber, wenn diesen bereits vorab weitere Zuschlagstoffe zugefügt werden, mit einem Vormischer, der z.B. wiederum als Schneckenmischer ausgeführt sein kann, dem Schneckenmischer 42 zugeführt. Über eine Länge 43 der Förderschnecke ist zumindest eine Eintragseinrichtung 44, z.B. eine Düse zur Versprühung des Bindemittels, angeordnet. Selbstverständlich können mehrere Eintragseinrichtungen 44 für das Bindemittel und/öder für zusätzliche Zuschlagstoffe vorhanden sein. Aufgrund der Länge 43 des Schneckenmischers 42 kann eine sehr homogene Vermischung der Schaumstoffflocken 3 mit dem Bindemittel und/oder den Zuschlagstoffen erreicht werden.

Es können auch bei dieser Ausführungsvariante wiederum gegenläufige Schnecken auf einer Welle verwendet werden bzw. ist die Anordnung mehrerer Wellen mit gegenläufigen Schnekkengängen, wie bereits beschrieben, möglich.

Die fertige Mischung verläßt den Schneckenmischer 42 gegebenenfalls unter Zwischenschaltung eines Pufferbehälters (in Fig. 4 nicht dargestellt), um über eine Dosiereinrichtung 45, welche in der Ausführungsvariante nach Fig. 4 wiederum ein Zellrad ist, der Form 10 direkt oder aber durch Blasrohre, durch weitere Schneckenförderer, durch Kolbenbefüllung etc. zugeführt zu werden.

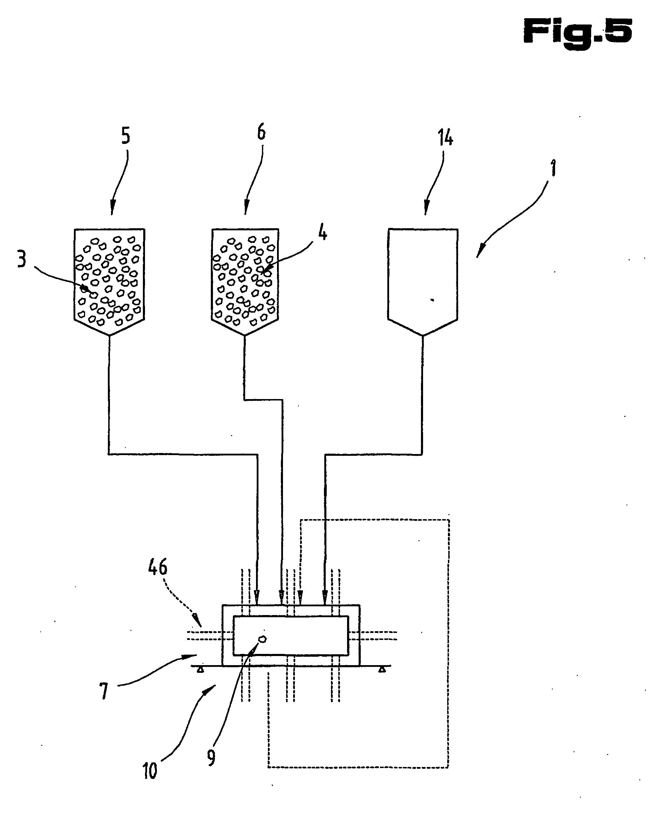

Schließlich ist in Fig. 5 noch eine Ausführungsvariante der erfindungsgemäßen Vorrichtung 1 gezeigt, bei der die Form 10 selbst als Wägebehälter 7 fungiert und der die Schaumstoffflokken 3, 4 aus Vorratsbehältern 5, 6 sowie das Bindemittel aus dem Vorratsbehälter 14 zugeführt werden. Die Förderung der Schaumstoffflocken 3, 4 erfolgt bevorzugt über Luft als Fördermedium und können diese z.B. über strichliert angedeutete Öffnungen 46 in den Formhohlraum 9 eingeblasen werden. Selbstverständlich ist die Anordnung eigener Einfüllöffnungen möglich. Die Öffnungen 46 können darüber hinaus auch zur Zufuhr eines Reaktionsmediums, z.B. Dampf oder dgl., verwendet werden und können gleichzeitig dem Abströmen der Förderluft dienen. Bevorzugt sind mehrere Öffnungen 46 über die Oberfläche der Form 10 verteilt angeordnet.

Anstelle der Verwendung eines Bindemittels ist es weiters möglich, insbesondere bei Verwendung von Heißluft als Fördermedium eine direkte Verschmelzung der Schaumstoffflokken 3, 4 zu erreichen. Für diesen Fall ist es unter Umständen günstig, die Zusammensetzung des Schaumstoffproduktes nicht erst in der Form 10 zu ermitteln, sondern bereits vorab zwischen den Vorratsbehältern 5, 6 und der Form 10 z.B. Wägeeinrichtungen wie den Wägebehälter 7 vorzusehen.

Da bei sämtlichen Ausführungsvarianten immer auch die Möglichkeit besteht, daß aufgrund der Zerkleinerung von Schaumstoffteilen ein gewisser Staubanteil in den Raumgewichtsfraktionen vorhanden ist, kann z.B. nach den Zerkleinerungseinrichtungen oder vor dem Wägebehälter 7 ein Staubabscheider, vorzugsweise für jeden Vorratsbehälter 5, 6, 14 ein eigener, angeordnet sein.

Mit der erfindungsgemäßen Vorrichtung 1 können unterschiedlichste Formteile hergestellt werden, wobei diese Formteile erfindungsgemäß ein sehr einheitliches Raumgewicht, d.h. ein Raumgewicht welches nur in geringen Grenzen variiert, aufweisen, sofern keine Verdichtung des Rohstoffgemisches während der Herstellung erfolgte. Eine Verdichtung kann aus den bereits eingangs erwähnten Gründen erfolgen.

Es können weiters Schaumstoffprodukte, z.B. Formteile, hergestellt werden, welche insbesondere zur Schalldämmung geeignet sind. So ist es z.B. möglich, Zulieferteile für die Automobilindustrie zu fertigen, wobei diese Teile eine Deckschicht, z.B. ein Vlies aufweisen können, welches mit dem Schaumstoffflocken/Bindemittelgemisch "hinterspritzt" wird. Diese Deckschicht kann vor der Befüllung in den Formhohlraum eingelegt werden und in diesem über ein angelegtes Vakuum z.B. gehalten werden um ein Verrutschen der Deckschicht während des Füllvorganges zu vermeiden.

Die "Hinterspritzung" kann nun derart erfolgen, daß die mit dem Bindemittel vermischten Schaumstoffflocken 3, 4 in den Formhohlraum eingeblasen werden. Dabei ist möglich, insbesondere durch Veränderung des Druckes des Fördermediums Luft, also des Einfülldruckes und/oder der Geschwindigkeit des Füllvorganges eine sogenannte Schwer- und eine sogenannte Leichtschicht aus dem Schaumstoffflocken/Bindemittelgemisch für ein sogenanntes Feder/Massesystem herzustellen.

Andererseits besteht aber selbstverständlich die Möglichkeit für die Schwerschicht ein im Vergleich zum Rohstoffgemisch für die Leichtschicht unterschiedliches Rohstoffgemisch zu verwenden, beispielsweise auch Gummigranulatmischungen, wobei in diesem Gummigranulat andere dem Fachmann bekannte Zuschlagsstoffe beigemengt werden können. Weiters besteht die Möglichkeit, die Schwerschicht derart herzustellen, daß der Füllvorgang unterbrochen wird und die bereits eingefüllten Schaumstoffflocken 3, 4 über diverse Mittel, z.B. Stempel, zumindest bereichsweise im Formhohlraum zu verdichten.

Anstelle von Vliesen ist es weiters möglich, andersartige Deckschichten, z.B. Teppiche, zur Herstellung von beispielsweise Hutablagen für PKW's zu verwenden, sodaß die Angabe der Materialien für die Deckschichten nicht als limitierend anzusehen sind.

Der Ordnung halber sei abschließend darauf hingewiesen, daß zum besseren Verständnis der Vorrichtung 1 diese bzw. deren Bestandteile teilweise unmaßstäblich und/oder vergrößert und/oder verkleinert dargestellt wurden.

### Bezugszeichenaufstellung

- 1: Vorrichtung
- 2: Schaumstoffprodukt
- 3: Schaumstoffflocke
- 4: Schaumstoffflocke
- 5: Vorratsbehälter

- 6: Vorratsbehälter
- 7: Wägebehälter
- 8: Wägebehälter
- 9: Formhohlraum
- 10: Form

- 11: Schieber
- 12: Schieber
- 13: Mischer
- 14: Vorratsbehälter
- 15: Vorratsbehälter

- 16: Polyol
- 17: Polyisocyanat
- 18: Vorratsbehälter
- 19: Schaumstoffflocke
- 20: Bereich

- 21: Linie
- 22: Haufen
- 23: Pfeil
- 24: Datenverarbeitungsanlage
- 25: Bereich

- 26: Steuereinrichtung
- 27: Sortierer
- 28: Vorratsbehälter
- 29: Ventil
- 30: Pufferbehälter

- 31: Wägeeinrichtung
- 32: Freifallmischstrecke
- 33: Bereich
- 34: Mischeinrichtung
- 35: Länge

- 36: Eintragseinrichtung
- 37: Breite
- 38: Bereich
- 39: Trenneinrichtung
- 40: Linie

- 41: Presse
- 42: Schneckenmischer
- 43: Länge
- 44: Eintragseinrichtung
- 45: Dosiereinrichtung

- 46: Öffnung

## Patentansprüche

1. Verfahren zur Herstellung von Schaumstosprodukten (2) aus Schaumstoffflocken (3, 4, 19), insbesondere aus Recyclingschaumstoffflocken, bei dem Schaumstoffflocken (3, 4,19) mit unterschiedlichem Raumgewicht in einem vorbestimmbaren Mischungsverhältnis vermischt und durch oberflächliches Anschmelzen und/oder über zumindest ein Bindemittel, gegebenenfalls in einer Form (10), miteinander verbunden werden, **dadurch gekennzeichnet, daß** Schaumstoffflocken (3) einer ersten Raumgewichtsfraktion mit Raumgewichten, die zumindest überwiegend größer oder gleich einem Soll-Raumgewicht des Schaumstoffproduktes (2) sind, mit einem definierten Gewicht oder mit einem definierten Volumen in eine Meßeinrichtung eingebracht werden und deren Gesamtvolumen oder Gesamtgewicht gemessen wird, daß weiters Schaumstoffflocken (4) einer zweiten Raumgewichtsfraktion mit Raumgewichten, die zumindest überwiegend kleiner oder gleich dem Soll-Raumgewicht des Schaumstoffproduktes (2) ist, ebenfalls mit einem definierten Gewicht oder definierten Volumen in die gleiche Meßeinrichtung eingebracht werden und deren Gesamtvolumen oder Gesamtgewicht gemessen wird, oder daß das Gesamtgewicht bzw. das Gesamtvolumen der beiden Raumgewichtsfraktionen nach der Einzelmessung der ersten Raumgewichtsfraktion gemeinsam gemessen wird, und daß aus den ermittelten Daten die Abweichung des tatsächlichen Raumgewichts des Schaumstoffproduktes (2) vom Soll-Raumgewicht bestimmt wird.

2. Verfahren nach Anspruch 1, **dadurch gekennzeichnet, daß** aufgrund der ermittelten Daten die Menge oder das Volumen einer Raumgewichtsfraktion für das Schaumstoffprodukt (2) in der Meßeinrichtung erhöht oder erniedrigt wird.

3. Verfahren nach Anspruch 1 oder 2, **dadurch gekennzeichnet, daß** mit den ermittelten Daten zur Herstellung eines weiteren Schaumstoffproduktes (2) das mengen- oder volumsbezogene Verhältnis der Raumgewichtsfraktionen zueinander entsprechend der Abweichung vom Sollgewicht angepaßt wird.

4. Verfahren nach einem der vorhergehenden Ansprüche, **dadurch gekennzeichnet, daß** das oberflächliche Anschmelzen der Schaumstoffflocken (3, 4, 19) mit Warm- oder Heißluft erfolgt.

5. Verfahren nach einem der Ansprüche 1 bis 3, **dadurch gekennzeichnet, daß** die Heißluft zumindest teilweise als Förderluft für die Schaumstoffflocken (3, 4, 19) verwendet wird.

6. Verfahren nach einem der Ansprüche 1 bis 3, **dadurch gekennzeichnet, daß** das Bindemittel aus den Schaumstoffflocken (3, 4, 19) durch Reaktion zumindest einer funktionellen Gruppe der Schaumstoffmoleküle durch Überleiten eines Reaktivgases gebildet wird.

7. Verfahren nach einem der vorhergehenden Ansprüche, **dadurch gekennzeichnet, daß** die Vermischung der Schaumstoffflocken (3, 4, 19) mit dem Bindemittel bzw. Bindemittelgemisch durch Aufsprühen auf die Schaumstoffflocken (3, 4, 19) in einem Schneckenmischer (42) durchgeführt wird.

8. Verfahren nach Anspruch 7, **dadurch gekennzeichnet, daß** die Vermischung in einem Schneckenmischer (42) mit auf zumindest einer Welle angeordneten gegenläufigen Mischschnecken durchgeführt wird.

9. Verfahren nach einem der Ansprüche 1 bis 3, **dadurch gekennzeichnet, daß** die Vermischung der Schaumstoffflocken (3, 4, 19) mit dem Bindemittel bzw. Bindemittelgemisch im freien Fall durchgeführt wird.

10. Verfahren nach einem der Ansprüche 1 bis 3, **dadurch gekennzeichnet, daß** die Vermischung der Schaumstoffflocken (3, 4, 19) mit dem Bindemittel bzw. Bindemittelgemisch durch Einsprühen des Bindemittels bzw. Bindemittelgemisches in einen Formhohlraum (9) der Form (10) erfolgt.

11. Verfahren nach einem der vorhergehenden Ansprüche, **dadurch gekennzeichnet, daß** zur Bestimmung des Raumgewichts ein Wägebehälter (7, 8) verwendet wird, der eine getrennte Ermittlung zumindest einer Raumgewichtsfraktion ermöglicht, wobei ein über ein definiertes Teilvolumen des Wägebehälters (7, 8) überschreitender Anteil an Schaumstoffflocken (3, 4, 19) abgesondert und nur jener Anteil an Schaumstoffflocken (3, 4, 19) gewogen wird, der dem definierten Teilvolumen entspricht bzw. dieses unterschreitet.

12. Verfahren nach einem der vorhergehenden Ansprüche, **dadurch gekennzeichnet, daß** zur Dosierung der Schaumstoffflocken (3, 4, 19) und/oder des Schaumstoffflocken-Bindemittelgemisches in die Form zumindest ein Zellrad verwendet wird.

13. Verfahren nach einem der vorhergehenden Ansprüche, **dadurch gekennzeichnet, daß** zur Einstellung der Härte des Schaumstoffproduktes (2) ein Polyurethan-Präpolymer verwendet wird, wobei der Gehalt an Isocyanatgruppen in Abhängigkeit von einer Soll-Härte festgelegt wird.

14. Vorrichtung (1) zur Herstellung eines Schaumstoffproduktes (2) aus Schaumstoffflocken (3, 4, 19) mit mehreren Vorratsbehältern (5, 6) für Teile oder Flocken aus Kunststoffschaum, gegebenenfalls einer Zerkleinerungseinrichtung, die den Vorratsbehältern (5, 6) vor und/oder nachgeordnet ist, zumindest einem Meßbehälter, gegebenenfalls zumindest einem Vorratsbehälter (14, 15) für zumindest ein Bindemittel und/oder weitere Zusatzstoffe, sowie mit einer Form (10), der gegebenenfalls ein Mischer und/oder zumindest ein Pufferbehälter (30) vorgeordnet ist, **dadurch gekennzeichnet, daß** in bzw. an dem Meßbehälter zumindest eine Trenneinrichtung, z.B. ein Schieber (11), angeordnet ist, über die ein definiertes Teilvolumen vom Gesamtvolumen des Meßbehälters zur gesonderten Erfassung des Gesamtgewichts oder des Gesamtvolumens einzelner unterschiedlicher Raumgewichtsfraktionen der Schaumstoffflocken (3, 4, 19) abtrennbar ist.

15. Vorrichtung (1) nach Anspruch 14 **dadurch gekennzeichnet, daß** der Meßbehälter derart ausgebildet ist, daß das Gewicht oder das Volumen eines Inhaltes des Teilvolumens unabhängig von einem Gesamtgewicht des vollständig befüllten Meßbehälters bestimmt werden kann.

16. Vorrichtung (1) nach Anspruch 15, **dadurch gekennzeichnet, daß** ein das Teilvolumen definierender Teil des Meßbehälters mechanisch trennbar vom restlichen Teil des Meßbehälters ausgeführt ist.

17. Vorrichtung (1) nach einem der vorhergehenden Ansprüche 14 bis 16, **dadurch gekennzeichnet, daß** der Mischer (13) als Schneckenmischer (42) oder als Freifallmischer oder als Statikmischer oder als Elektrostatikmischer ausgebildet ist.

18. Vorrichtung (1) nach Anspruch 17, **dadurch gekennzeichnet, daß** der Schneckenmischer (42) zumindest eine, insbesondere zwei Schneckenwellen mit gegenläufig, d.h. nach außen bzw. innen fördernden Schneckengängen aufweist.

19. Vorrichtung (1) nach einem der vorhergehenden Ansprüche 14 bis 18, **dadurch gekennzeichnet, daß** vor der Form (10) eine Dosiereinrichtung (45) angeordnet ist, die als Zellradschleuse ausgebildet ist, an der gegebenenfalls eine veränderliche Drehzahl einstellbar ist, insbesondere an einer Antriebseinrichtung des Zellrades.

20. Vorrichtung (1) nach einem der vorhergehenden Ansprüche 17 bis 19, **dadurch gekennzeichnet, daß** der Schneckenmischer (42) zumindest eine Sprühdüse zum Einbringen eines Bindemittels bzw. Bindemittelgemisches und/oder zumindest eines Zuschlagstoffes aufweist.

21. Vorrichtung (1) nach einem der vorhergehenden Ansprüche 14 bis 20, **dadurch gekennzeichnet, daß** zwischen dem Mischer (13) und der Form (10) ein Pufferbehälter (30) mit einem Volumen angeordnet ist, das zumindest dem Volumen eines Formhohlraumes (9) der Form (10) entspricht.

22. Vorrichtung (1) nach Anspruch 21, **dadurch gekennzeichnet, daß** das Volumen des Pufferbehälters (30) einem ganzzahligen Vielfachen dem Volumen des Formhohlraumes (9) entspricht.

23. Vorrichtung (1) nach Anspruch 21 oder 22, **dadurch gekennzeichnet, daß** dem Pufferbehälter (30) eine Wägeeinrichtung oder eine Dosiereinrichtung, z.B. ein Zellrad, zugeordnet ist.

24. Vorrichtung (1) nach einem der vorhergehenden Ansprüche 14 bis 23, **dadurch gekennzeichnet, daß** in der Form (10) zumindest eine Einrichtung zum Verteilen eines Bindemittels, z.B. eine Sprühdüse, angeordnet ist.

25. Vorrichtung (1) nach einem der vorhergehenden Ansprüche 14 bis 24, **dadurch gekennzeichnet, daß** der Form (10) eine Einrichtung zur Erzeugung eines Vakuums im Formhohlraum (9) zugeordnet ist.

26. Vorrichtung (1) nach einem der vorhergehenden Ansprüche 14 bis 25, **dadurch gekennzeichnet, daß** die Form (10) als Wägebehälter (7) und/oder Mischer (13) ausgebildet ist.

27. Vorrichtung (1) nach einem der vorhergehenden Ansprüche 14 bis 26, **dadurch gekennzeichnet, daß** dem Meßbehälter zumindest eine Meßzelle zugeordnet ist, mit der die Füllhöhe an Schaumstoffflocken (3, 4, 19) in der Meßzelle bestimmt werden kann.

28. Meßbehälter zur Ermittlung des Gewichts oder des Volumens eines definierten Volumens oder Gewichts einer Befüllung, z.B. aus Schaumstoffflocken (3, 4, 19) mit einem Meßzellenvolumen, das durch einen Mantel, einen Boden sowie eine Abdeckung definiert wird, **dadurch gekennzeichnet, daß** zumindest eine Trenneinrichtung, z.B. ein Schieber (11) angeordnet ist, mit der das Meßzellenvolumen in definierte Teilvolumina unterteilt werden kann.

29. Meßbehälter nach Anspruch 28 **dadurch gekennzeichnet; daß** die Trenneinrichtung horizontal angeordnet und dem Mantel zugeordnet ist.

30. Meßbehälter nach Anspruch 28 oder 29 **dadurch gekennzeichnet, daß** die zumindest ein Teilvolumen definierenden Meßbehälterteile mechanisch von den übrigen Meßbehälterteilen abtrennbar ist.

31. Meßbehälter nach einem der Ansprüche 28 bis 30, **dadurch gekennzeichnet, daß** zumindest einem Teilvolumen eine Wägeeinrichtung zugeordnet ist.

32. Schaumstoffprodukt (2) aus über ein ein- oder mehrkomponentiges Bindemittel miteinander verbundenen Schaumstoffflocken (3, 4, 19) aus Polyurethan-Weichschaumstoff, insbesondere Recyclingschaumstoffflocken, unterschiedlichen Raumgewichts, **dadurch gekennzeichnet, daß** ein Bindemittelanteil bezogen auf einen Anteil an Schaumstoffflocken (3, 4, 19) im Bereich zwischen 1 Gew.-% und 5 Gew.-%, vorzugsweise im Bereich zwischen 2 Gew.-% und 4 Gew.-%, insbesondere 3 Gew.-% beträgt.

33. Schaumstoffprodukt (2) nach Anspruch 32, **dadurch gekennzeichnet, daß** an zumindest einer Oberfläche eine Deckschicht angeordnet ist.

34. Schaumstoffprodukt (2) nach Anspruch 33, **dadurch gekennzeichnet, daß** die Deckschicht als Vlies, Teppich oder Filz ausgebildet ist.

35. Schaumstoffprodukt (2) nach einem der Ansprüche 32 bis 34, **dadurch gekennzeichnet, daß** zumindest ein Teilvolumen eine im Vergleich zum restlichen Volumen höhere Dichte aufweist.

36. Schaumstoffprodukt (2) nach Anspruch 35, **dadurch gekennzeichnet, daß** das verdichtete Teilvolumen als Schwerschicht für ein Masse-Feder-System eines Schallabsorbers ausgebildet ist.

37. Schaumstoffprodukt (2) nach Anspruch 36 **dadurch gekennzeichnet, daß** die Schwerschicht zumindest teilweise aus einem Gummigranulat gebildet ist.

## Claims

1. Method of producing plastic foam products (2) from plastic foam flocks (3, 4, 19), in particular from recycled plastic foam flocks, whereby plastic foam flocks (3, 4, 19) of a different volumetric weight are mixed in a predeterminable mixing ratio and are bonded to one another by surface melting and/or by means of at least one binding agent, optionally in a mould (10), **characterised in that** plastic foam flocks (3) of a first volumetric weight fraction with volumetric weights that are at least predominantly greater than or the same as a desired volumetric weight of the plastic foam product (2) are introduced into a measuring device with a defined weight or with a defined volume and the total volume or total weight thereof is measured, and plastic foam flocks (4) of a second volumetric weight fraction with volumetric weights that are at least predominantly lower than or the same as the desired volumetric weight of the plastic foam product (2) are introduced into the same or a different measuring device also with a defined weight or defined volume and the total volume or total weight thereof is measured, or the total weight or total volume of the two volumetric weight fractions are weighed jointly after an individual measurement has been taken of the first volumetric weight fraction, and the variance of the actual volumetric weight of the plastic foam product (2) from the desired volumetric weight is determined from the resultant data.

2. Method as claimed in claim 1, **characterised in that** the quantity or volume of a volumetric weight fraction for the plastic foam product (2) in the measuring device is increased or reduced on the basis of the resultant data.

3. Method as claimed in claim 1 or 2, **characterised in that** the resultant data for producing another plastic foam product (2) is used as a basis for adjusting the ratio by quantity or volume of the volumetric weight fractions relative to one another, depending on the variance from the desired weight.

4. Method as claimed in one of the preceding claims, **characterised in that** the surface melting of the plastic foam flocks (3, 4, 19) is effected by means of warm or hot air.

5. Method as claimed in one of claims 1 to 3, **characterised in that** the hot air is at least partially used as conveying air for the plastic foam flocks (3, 4, 19).

6. Method as claimed in one of claims 1 to 3, **characterised in that** the binding agent is formed from the plastic foam flocks (3, 4, 19) by reacting at least one functional group of the foam molecules by passing a reactive gas over them.

7. Method as claimed in one of the preceding claims, **characterised in that** the plastic foam flocks (3, 4, 19) are mixed with the binding agent or binding agent mixture by spraying onto the plastic foam flocks (3, 4, 19) in a screw mixer (42).

8. Method as claimed in claim 7, **characterised in that** the mixing takes place in a screw mixer (42) with counter-rotating mixing screws disposed on at least one shaft.

9. Method as claimed in one of claims 1 to 3, **characterised in that** the plastic foam flocks (3, 4, 19) are mixed with the binding agent or binding agent mixture in a free-fall system.

10. Method as claimed in one of claims 1 to 3, **characterised in that** the plastic foam flocks (3, 4, 19) are mixed with the binding agent or binding agent mixture by spraying the binding agent or binding agent mixture into a mould cavity (9) of the mould (10).

11. Method as claimed in one of the preceding claims, **characterised in that** a weighing container (7, 8) is used to determine the volumetric weight, which enables at least one volumetric weight fraction to be determined separately, whereby a proportion of plastic foam flocks (3, 4, 19) exceeding a defined part-volume of the weighing container (7, 8) is separated and only the proportion of plastic foam flocks (3, 4, 19) corresponding to the defined part-volume or less than it is weighed.

12. Method as claimed in one of the preceding claims, **characterised in that** at least one star feeder is used to meter the plastic foam flocks (3, 4, 19) and/or the plastic foam flocks/binding agent mixture into the mould.

13. Method as claimed in one of the preceding claims, **characterised in that** a polyurethane prepolymer is used to adjust the hardness of the plastic foam product (2), the content of isocyanate groups being fixed depending on a desired hardness.

14. Apparatus (1) for producing a plastic foam product (2) from plastic foam flocks (3, 4, 19) with several supply containers (5, 6) for pieces or flocks of plastic foam, optionally with a crushing device disposed upstream and/or downstream of the supply containers (5, 6), at least one measuring container, optionally at least one supply container (14, 15) for at least one binding agent and/or other additives, as well as a mould (10), upstream of which a mixer and/or at least one buffer container (30) is optionally disposed, **characterised in that** at least one separating device, e.g. a slide (11), is provided in or alongside the measuring container, by means of which a defined part volume of the total volume of the measuring container can be separated in order to detect separately the total weight or the total volume of individual different volumetric weight fractions of the plastic foam flocks (3, 4, 19).

15. Apparatus (1) as claimed in claim 14, **characterised in that** the measuring container is designed so that the weight or the volume of a content of the part-volume can be determined independently of a total weight of the completely filled measuring container.

16. Apparatus (1) as claimed in claim 15, **characterised in that** a part of the measuring container defining the part-volume is designed so that it can be mechanically separated from the remaining part of the measuring container.

17. Apparatus (1) as claimed in one of the preceding claims 14 to 16, **characterised in that** the mixer (13) is provided in the form of a screw mixer (42) or a free-fall mixer or a static mixer or an electrostatic mixer.

18. Apparatus (1) as claimed in claim 17, **characterised in that** the screw mixer (42) has at least one, in particular two screw shafts with counter-rotating, i.e. inwardly and outwardly conveying, screw channels.

19. Apparatus (1) as claimed in one of the preceding claims 14 to 18, **characterised in that** a metering device (45) is provided upstream of the mould (10), which is provided in the form of a star feeder, for which a variable speed may be set if necessary, in particular at a drive mechanism of the star feeder.

20. Apparatus (1) as claimed in one of the preceding claims 17 to 19, **characterised in that** the screw mixer (42) has at least-one spray nozzle for introducing a binding agent or binding agent mixture and/or at least one additive.

21. Apparatus (1) as claimed in one of the preceding claims 14 to 20, **characterised in that** a buffer container (30) is provided between the mixer (13) and the mould (10) with a capacity which corresponds at least to the volume of a mould cavity (9) of the mould (10).

22. Apparatus (1) as claimed in claim 21, **characterised in that** the capacity of the buffer container (30) corresponds to a whole-number multiple of the volume of the mould cavity (9).

23. Apparatus (1) as claimed in claim 21 or 22, **characterised in that** a weighing device or a metering device, e.g. a star feeder, co-operates with the buffer container (30).

24. Apparatus (1) as claimed in one of the preceding claims 14 to 23, **characterised in that** the mould (10) is provided with at least one mechanism for distributing a binding agent, e.g. a spray nozzle.

25. Apparatus (1) as claimed in one of the preceding claims 14 to 24, **characterised in that** the mould (10) is provided with a system for creating a vacuum in the mould cavity (9).

26. Apparatus (1) as claimed in one of the preceding claims 14 to 25, **characterised in that** the mould (10) is designed as a weighing container (7) and/or mixer (13).

27. Apparatus (1) as claimed in one of the preceding claims 14 to 26, **characterised in that** the measuring container is provided with at least one measuring unit by means of which the level of the plastic foam flocks (3, 4, 19) in the measuring unit can be determined.

28. Measuring container for determining the weight or the volume of a defined volume or weight of a filling, e.g. plastic foam flocks (3, 4, 19), with a measuring unit volume defined by a casing, a base and a cover, **characterised in that** at least one separating device, e.g. a slide (11), is provided, by means of which the measuring unit volume can be divided into defined part-volumes.

29. Measuring container as claimed in claim 28, **characterised in that** the separating device is disposed horizontally and co-operates with the casing.

30. Measuring container as claimed in claim 28 or 29, **characterised in that** the parts of the measuring container defining at least a part-volume can be mechanically separated from the other parts of the measuring container.

31. Measuring container as claimed in one of claims 28 to 30, **characterised in that** a weighing device co-operates with at least a part-volume.

32. Plastic foam product (2) made from plastic foam flocks (3, 4, 19), in particular recycled plastic foam flocks, of different volumetric weights bonded to one another by means of a single- or multi-component binding agent, **characterised in that** a proportion of binding agent relative to a proportion of plastic foam flocks (3, 4, 19) is in the range of between 1 % by weight and 5 % by weight, preferably in the range of between 2 % by weight and 4 % by weight, in particular 3 % by weight.

33. Plastic foam product (2) as claimed in claim 32, **characterised in that** a facing is provided on at least one surface.

34. Plastic foam product (2) as claimed in claim 33, **characterised in that** the facing is a non-woven material, carpet or felt.

35. Plastic foam product (2) as claimed in one of claims 32 to 34, **characterised in that** at least a part-volume has a higher density than the remaining volume.

36. Plastic foam product (2) as claimed in claim 35, **characterised in that** the compacted part-volume is a heavy layer for a mass-spring system of a sound absorber.

37. Plastic foam product (2) as claimed in claim 36, **characterised in that** the heavy layer is at least partially made from a rubber granulate.

## Revendications

1. Procédé de fabrication de produits en mousse (2) à partir de flocons de mousse (3, 4, 19), en particulier à partir de flocons de mousse de recyclage, où des flocons de mousse (3, 4, 19) d'un poids spécifique différent sont mélangés en un rapport de mélange pouvant être prédéterminé et sont reliés les uns aux autres par une fusion en surface et/ou par au moins un liant, le cas échéant dans un moule (10), **caractérisé en ce que** des flocons de mousse (3) d'une première fraction de poids spécifique avec des poids spécifiques, qui sont au moins en majorité plus grands ou égaux à un poids spécifique de consigne du produit en mousse (2), sont introduits en un poids défini ou en un volume défini dans une installation de mesure, et leur volume total ou poids total est mesuré, **en ce qu'**en outre des flocons de mousse (4) d'une deuxième fraction de poids spécifique avec des poids spécifiques qui sont au moins en majorité plus petits ou égaux au poids spécifique de consigne du produit en mousse (2), sont introduits également en un poids défini ou volume défini dans la même installation de mesure, et leur volume total ou poids total est mesuré, ou bien que le poids total respectivement le volume total des deux fractions de poids spécifiques, après la mesure individuelle de la première fraction de poids spécifique, est mesuré en commun, et **en ce qu'**on détermine à partir des données obtenues l'écart du poids spécifique réel du produit en mousse (2) du poids spécifique de consigne.

2. Procédé selon la revendication 1, **caractérisé en ce que** sur la base des données obtenues, la quantité ou le volume d'une fraction de poids spécifique pour le produit en mousse (2) est augmenté ou diminué dans l'installation de mesure.

3. Procédé selon la revendication 1 ou 2, **caractérisé en ce qu'**au moyen des données obtenues, pour la fabrication d'un autre produit en mousse (2), le rapport à rapporter à la quantité ou au volume des fractions de poids spécifiques l'une à l'autre est adapté conformément à l'écart du poids de consigne.

4. Procédé selon l'une des revendications précédentes, **caractérisé en ce que** la fusion en surface des flocons en mousse (3, 4, 19) a lieu avec de l'air chaud.

5. Procédé selon l'une des revendications 1 à 3, **caractérisé en ce que** l'air chaud est utilisé au moins partiellement comme air de convoyage des flocons de mousse (3, 4, 19).

6. Procédé selon l'une des revendications 1 à 3, **caractérisé en ce que** le liant est formé à partir des flocons de mousse (3, 4, 19) par réaction d'au moins un groupe fonctionnel des molécules de mousse par le passage d'un gaz de réaction.

7. Procédé selon l'une des revendications précédentes, **caractérisé en ce que** le mélange des flocons de mousse (3, 4, 19) avec le liant respectivement le mélange de liants est exécuté par pulvérisation sur les flocons de mousse (3, 4, 19) dans un mélangeur à vis (42).

8. Procédé selon la revendication 7, **caractérisé en ce que** le mélange est exécuté dans un mélangeur à vis (42) avec des vis de mélange tournant en sens opposé, disposées sur au moins un arbre.

9. Procédé selon l'une des revendications 1 à 3, **caractérisé en ce que** le mélange des flocons de mousse (3, 4, 19) avec le liant ou le mélange de liants est exécuté en chute libre.

10. Procédé selon l'une des revendications 1 à 3, **caractérisé en ce que** le mélange des flocons de mousse (3, 4, 19) avec le liant respectivement le mélange de liant est exécuté par pulvérisation du liant respectivement du mélange de liants dans un espace creux (9) du moule (10).

11. Procédé selon l'une des revendications précédentes, **caractérisé en ce que** pour la détermination du poids spécifique, un récipient de pesage (7, 8) est utilisé qui permet une détermination séparée d'au moins une fraction de poids spécifique, où une part en flocons de mousse (3, 4, 19) dépassant un volume partiel défini du récipient de pesage (7, 8) est séparée et seulement la part en flocons de mousse (3, 4, 19) est pesée qui correspond au volume partiel défini respectivement qui est en dessous de celui-ci.

12. Procédé selon l'une des revendications précédentes, **caractérisé en ce que** pour le dosage des flocons de mousse (3, 4, 19) et/ou du mélange de liants des flocons de mousse dans le moule, au moins une roue cellulaire est utilisée.

13. Procédé selon l'une des revendications précédentes, **caractérisé en ce que** pour le réglage de la dureté du produit en mousse (2), un prépolymère de polyuréthane est utilisé, où la teneur en groupes d'isocyanate est fixée en fonction d'une dureté de consigne.

14. Dispositif (1) pour la fabrication d'un produit en mousse (2) en flocons de mousse (3, 4, 19) avec plusieurs récipients de stockage (5, 6) pour des parties ou flocons en mousse de matière synthétique, le cas échéant une installation de fragmentation qui est disposée en amont et/ou en aval des récipients de stockage (5, 6), au moins un récipient de mesure, le cas échéant au moins un récipient de stockage (14, 15) pour au moins un liant et/ou d'autres produits d'addition et avec un moule (10) en amont duquel est disposé le cas échéant un mélangeur et/ou au moins un réservoir tampon (30), **caractérisé en ce qu'**il est disposé dans respectivement au récipient de mesure au moins une installation de séparation, par exemple un poussoir (11) par laquelle un volume partiel défini peut être séparé du volume total du récipient de mesure pour la détection séparée du poids total ou du volume total de fractions individuelles différentes de poids spécifiques des flocons de mousse (3, 4, 19).

15. Dispositif (1) selon la revendication 14, **caractérisé en ce que** le récipient de mesure est réalisé de façon que le poids ou le volume d'un contenu du volume partiel peut être déterminé indépendamment d'un poids total du récipient de mesure complètement rempli.

16. Dispositif (1) selon la revendication 15, **caractérisé en ce qu'**une partie du récipient de mesure définissant le volume partiel est réalisée de manière mécaniquement séparable de la partie restante du récipient de mesure.

17. Dispositif (1) selon l'une des revendications 14 à 16, **caractérisé en ce que** le mélangeur (13) est réalisé comme mélangeur à vis (42) ou comme mélangeur à chute libre ou comme mélangeur statistique ou comme mélangeur électrostatique.

18. Dispositif (1) selon la revendication 17, **caractérisé en ce que** le mélangeur à vis (42) présente au moins un, en particulier deux arbres de vis avec des pas de vis en sens opposés, c'est-à-dire convoyant vers l'extérieur respectivement vers l'intérieur.

19. Dispositif (1) selon l'une des revendications 14 à 18, **caractérisé en ce qu'**il est disposé en amont du moule (10) une installation de dosage (45) qui est réalisée comme écluse à roue cellulaire, à laquelle, le cas échéant, une vitesse de rotation modifiable est réglable, en particulier à une installation d'entraînement de la roue cellulaire.

20. Dispositif (1) selon l'une des revendications précédentes 17 à 19, **caractérisé en ce que** le mélangeur à vis (42) présente au moins une buse de projection pour introduire un liant respectivement un mélange de liants et/ou au moins un produit d'addition.

21. Dispositif (1) selon l'une des revendications précédentes 14 à 20, **caractérisé en ce qu'**est disposé entre le mélangeur (13) et le moule (10) un réservoir tampon (30) avec un volume qui correspond au moins au volume d'un espace creux (9) du moule (10).

22. Dispositif (1) selon la revendication 21, **caractérisé en ce que** le volume du réservoir tampon (30) correspond à un multiple entier du volume de l'espace creux de moule (9).

23. Dispositif (1) selon la revendication 21 ou 22, **caractérisé en ce qu'**il est associé au réservoir tampon (30) une installation de pesage ou une installation de dosage, par exemple une roue cellulaire.

24. Dispositif (1) selon l'une des revendications 14 à 23, **caractérisé en ce qu'**il est disposé dans le moule (10) au moins une installation pour répartir un liant, par exemple une buse de projection.

25. Dispositif (1) selon l'une des revendications précédentes 14 à 24, **caractérisé en ce qu'**il est associé au moule (10) une installation pour produire un vide dans l'espace creux de moule (9).

26. Dispositif (1) selon l'une des revendications précédentes 14 à 25, **caractérisé en ce que** le moule (10) est réalisé comme récipient de pesage (7) et/ou mélangeur (13).

27. Dispositif (1) selon l'une des revendications précédentes 14 à 26, **caractérisé en ce qu'**il est associé au récipient de mesure au moins une cellule de mesure au moyen de laquelle peut être déterminé le niveau de remplissage en flocons de mousse (3, 4, 19) dans la cellule de mesure.

28. Récipient de mesure pour déterminer le poids ou le volume d'un volume ou poids défini d'un remplissage, par exemple en flocons de mousse (3, 4, 19) avec un volume de cellule de mesure, qui est défini par une enveloppe, un fond et par un recouvrement, **caractérisé en ce qu'**au moins une installation de séparation, par exemple un poussoir (11), est disposée au moyen de laquelle le volume de cellule de mesure peut être divisé en des volumes partiels définis.

29. Récipient de mesure selon la revendication 28, **caractérisé en ce que** l'installation de séparation est disposée horizontalement et est associée à l'enveloppe.

30. Récipient de mesure selon la revendication 28 ou 29, **caractérisé en ce que** les parties de récipient de mesure définissant au moins un volume partiel peuvent être séparées mécaniquement des autres parties de récipient de mesure.

31. Récipient de mesure selon l'une des revendications 28 à 30, **caractérisé en ce qu'**il est associé à au moins un volume partiel une installation de pesage.

32. Produit en mousse (2) en flocons de mousse (3, 4, 19) reliés entre eux par un liant à un ou plusieurs composants en mousse souple en polyuréthane, en particulier en flocons de mousse de recyclage, d'un poids spécifique différent, **caractérisé en ce qu'**une part de liant rapportée à une part de flocons de mousse (3, 4, 19) se situe dans la plage entre 1 % en poids et 5% en poids, de préférence dans la plage entre 2% en poids et 4% en poids, et qu'il est en particulier de 3% en poids.

33. Produit en mousse (2) selon la revendication 32, **caractérisé en ce qu'**une couche de recouvrement est disposée à au moins une surface.

34. Produit en mousse (2) selon la revendication 33, **caractérisé en ce que** la couche de recouvrement est réalisée comme tissu non tissé, tapis ou feutre.

35. Produit en mousse (2) selon l'une des revendications 32 à 34, **caractérisé en ce qu'**au moins un volume partiel présente une densité plus élevée en comparaison au volume restant.

36. Produit en mousse (2) selon la revendication 35, **caractérisé en ce que** le volume partiel compacté est réalisé comme couche lourde pour un système de masse-élasticité d'un organe d'absorption des sons.

37. Produit en mousse (2) selon la revendication 36, **caractérisé en ce que** la couche lourde est réalisée au moins partiellement en un granulat de caoutchouc.
